# EUROPÄISCHE PATENTSCHRIFT

(11) **EP 3 426 604 B1**
(45) Veröffentlichungstag und Bekanntmachung des Hinweises auf die Patenterteilung: **24.06.2020**
(21) Anmeldenummer: 17707936.5
(22) Anmeldetag: 07.03.2017
(51) Int. Cl.: C01G 49/06, C09C 1/24, B01J 8/22

(54) **HERSTELLUNG VON EISENOXID-ROT-PIGMENT**
PRODUCTION OF IRON OXIDE RED PIGMENT
FABRICATION DE PIGMENT ROUGE D'OXYDE DE FER

(30) Priorität: 09.03.2016 EP 16159507
(43) Veröffentlichungstag der Anmeldung: 16.01.2019
(73) Patentinhaber: Lanxess Deutschland GmbH, 50569 Köln (DE)
(72) Erfinder: CZAPLIK, Waldemar, 41748 Viersen (DE)
(86) Internationale Anmeldenummer: PCT/EP2017/055249
(87) Internationale Veröffentlichungsnummer: WO 2017/153368

(56) Entgegenhaltungen:
- WO-A1-2013/045608
- WO-A1-2015/066905
- WO-A1-2016/034692
- WO-A1-2016/038152

## Beschreibung

Die vorliegende Erfindung betrifft ein verbessertes Verfahren zur Herstellung von Eisenoxid-Rot-Pigmenten nach dem Penniman-Verfahren mit Nitrat (auch Nitrat-Verfahren oder Direkt-Rot-Verfahren genannt) und eine Vorrichtung zur Durchführung dieses Verfahrens, sowie die Verwendung der Vorrichtung zur Herstellung von Eisenoxid-Rot-Pigmenten nach dem Penniman-Verfahren mit Nitrat.

Eisenoxide finden in vielen technischen Bereichen Anwendung. So werden sie beispielsweise als Farbpigmente in Keramiken, Baustoffen, Kunststoffen, Farben, Lacken und Papier eingesetzt, dienen als Grundlage für verschiedene Katalysatoren oder Trägermaterialien, können Schadstoffe adsorbieren oder absorbieren. Magnetische Eisenoxide finden Anwendungen in Magnetspeichermedien, Tonern, Ferrofluiden oder in medizinischen Anwendungen wie beispielsweise als Kontrastmittel für die Magnetresonanztomografie.

Eisenoxide lassen sich durch wässrige Fällungs- und Hydrolysereaktionen von Eisensalzen erhalten (Ullmann's Encyclopedia of Industrial Chemistry, VCH Weinheim 2006, Chapter 3.1.1., Iron Oxide Pigments, S. 61-67). Eisenoxidpigmente über den Fällungsprozess werden aus Eisensalzlösungen und alkalischen Verbindungen in Gegenwart von Luft erzeugt. Durch gezielte Steuerung der Reaktion lassen sich so auch feinteilige Goethit-, Magnetit- und Maghämit-Partikel darstellen. Die durch dieses Verfahren hergestellten Rotpigmente weisen jedoch eine vergleichsweise geringe Farbsättigung auf und finden ihren Einsatz deshalb vornehmlich in der Baustoffindustrie.

Die wässrige Herstellung von feinteiligem Hämatit, der der Modifikation α-Fe₂O₃ entspricht, ist jedoch deutlich aufwändiger. Durch Verwendung eines Reifungsschritts lässt sich unter Zugabe eines feinteiligen Eisenoxids der Modifikation Maghämit, γ-Fe₂O₃, oder Lepidokrokit, γ-FeOOH, als Keim auch durch eine direkte wässrige Fällung Hämatit herstellen [US 5,421,878; EP0645437; WO 2009/100767].

Eine weitere Methode zur Herstellung von Eisenoxid-Rot-Pigmenten ist der sogenannte Penniman-Prozess (US 1,327,061; US 1,368,748; US 2,937,927; EP 1106577A: US 6,503,315). Dabei werden Eisenoxidpigmente dadurch hergestellt, dass Eisenmetall unter Zusatz eines Eisensalzes und eines Eisenoxidkeims gelöst und oxidiert wird. So ist in SHEN, Qing; SUN, Fengzhi; Wujiyan Gongye 1997, (6), 5 - 6 (CH), Wujiyan Gongye Bianjib, (CA 128:218378n) ein Verfahren bekannt geworden, bei dem verdünnte Salpetersäure bei erhöhter Temperatur auf Eisen einwirkt. Hierbei entsteht eine Hämatit-Keimsuspension. Diese wird auf an sich bekannte Weise zu einer Suspension von Rotpigment aufgebaut, das Pigment wird aus dieser Suspension, falls gewünscht, auf an sich übliche Weise isoliert. Die durch dieses Verfahren hergestellten Rotpigmente weisen jedoch eine vergleichsweise geringe Farbsättigung auf, die ähnlich der Farbsättigung einer kommerziellen 130er-Norm sind, und finden ihren Einsatz deshalb vornehmlich in der Baustoffindustrie. Die 130er-Norm entspricht dem für Eisenoxidpigment-Farbmessungen gebräuchlichem Referenzstandard Bayferrox® 130. EP 1106577A offenbart eine Variante des Penniman-Verfahrens umfassend die Einwirkung von verdünnter Salpetersäure auf Eisen bei erhöhter Temperatur zur Erzeugung von Keimen, d.h. feinteiligen Eisenoxiden mit einer Teilchengröße kleiner als oder gleich 100 nm. Die Reaktion von Eisen mit Salpetersäure ist eine komplexe Reaktion und kann je nach Versuchsbedingungen entweder zu einer Passivierung des Eisens und damit zu einem Stillstand der Reaktion führen oder zu einem Auflösen des Eisens unter Bildung von gelöstem Eisennitrat. Beide Reaktionswege sind nicht erwünscht, und die Herstellung von feinteiligem Hämatit gelingt nur unter speziellen Versuchsbedingungen. EP 1106577A beschreibt derartige Bedingungen zur Herstellung von feinteiligem Hämatit. Dabei wird das Eisen mit verdünnter Salpetersäure bei Temperaturen zwischen 90 und 99°C zur Reaktion gebracht. WO 2013/045608 beschreibt ein Verfahren zur Herstellung von Eisenoxid-Rot-Pigmenten, bei dem der Reaktionsschritt der Herstellung der Keime, d.h. von feinteiligem Hämatit mit einer Teilchengröße kleiner als oder gleich 100 nm, verbessert wurde.

WO2015/066905 offenbart ein Verfahren zur Herstellung von Hämatit. Stickoxidhaltige Gase werden abgeführt, dann jedoch einer Gasreinigungseinheit zugeführt. Die verwendete Vorrichtung umfasst eine Begasungseinheit, eine Pumpe und eine Rührvorrichtung.

Das Penniman-Verfahren nach dem Stand der Technik wird in großtechnischem Maßstab bisher mit einfachen Mitteln durchgeführt. Beispielsweise wird der Pigmentaufbau, d.h. die Umsetzung von einer Hämatitkeim-Suspension, Eisen(ll)nitrat mit Eisen unter Begasung mit Luft bei Temperaturen von 80-90°C durchgeführt.

Die nach dem Penniman-Verfahren hergestellten Hämatitpigmente weisen üblicherweise in der für Eisenoxid-Pigmente üblichen sogenannten Lackabtestung in einem thixotropierten langöligen Alkydharz (in Anlehnung an DIN EN ISO 11664-4:2011-07 und DIN EN ISO 787-25:2007) einen a*-Wert im Purton von >25 CIELAB-Einheiten auf.

Diese an sich effizienten Verfahren, die eine direkte Herstellung von hochwertigen roten Eisenoxiden mit einer großen Variation der Farbwerte ermöglichen, weisen jedoch folgende Nachteile auf:
1. Emission von Stickoxiden: Stickoxide können giftig sein (z.B. die nitrosen Gase NO, NO₂ und N₂O₄, auch generell als "NOₓ" bezeichnet), erzeugen Smog, zerstören unter UV-Bestrahlung die Ozonschicht der Atmosphäre und sind Treibhausgase. Gerade Distickstoffmonoxid ist ein ca. um den Faktor 300 stärkeres Treibhausgas als Kohlendioxid. Distickstoffmonoxid wird außerdem mittlerweile als stärkster Ozonkiller betrachtet. Bei dem Penniman-Verfahren mit Salpetersäure entstehen sowohl die nitrosen Gase NO und NO₂ als auch Distickstoffmonoxid in nennenswerten Mengen.
2. Bei dem Penniman-Verfahren mit Salpetersäure werden stickstoffhaltige Abwässer erzeugt, die in nennenswerten Mengen Nitrate, Nitrite und Ammoniumverbindungen enthalten.
3. Das Penniman-Verfahren mit Salpetersäure ist sehr energieaufwändig, weil große Volumina wässriger Lösungen auf Temperaturen von 60°C bis 99°C erhitzt werden müssen. Zusätzlich wird durch den Eintrag von großen Mengen an sauerstoffhaltigen Gasen als Oxidationsmittel in die Reaktionsmischung Energie aus dem Reaktionsgemisch ausgetragen (Dampf-Strippung), die wieder als Wärme extern zugeführt werden muss.

Stickoxide im Sinne der vorliegenden Erfindung sind Stickstoff-Sauerstoffverbindungen. Zu dieser Gruppe gehören die Nitrosen Gase der allgemeinen Formel NOx, wobei der Stickstoff unterschiedliche Oxidationszahlen zwischen +1 und +5 aufweisen kann. Beispiele hierfür sind NO (Stickstoffmonoxid, Oxidationszahl +2), NO₂ (Stickstoffdioxid, Oxidationszahl +4), N₂O₅ (Oxidationszahl +5). NO₂ steht mit dessen Dimer N₂O₄ (beide Oxidationszahl +4) in einem temperatur- und druckabhängigem Gleichgewicht. Im Folgenden soll unter NO₂ sowohl NO₂ selbst als auch dessen Dimer N₂O₄ verstanden werden. N₂O (Distickstoffmonoxid, Lachgas, Oxidationszahl +1) gehört auch zu der Gruppe der Stickoxide, wird aber nicht zu den nitrosen Gasen gezählt.

Daher bestand die Aufgabe, ein effizientes und umweltfreundliches Verfahren zur Herstellung von Eisenoxid-Rot-Pigmenten bereitzustellen, das vorgenannte Nachteile vermeidet, wobei zum einen die Herstellung von Eisenoxid-Rot-Pigmenten mit einem breiten Farbspektrum in hoher Ausbeute erfolgt und wobei zum anderen der Anteil von an die Umwelt abgegebenen Stickoxiden und von an die Umwelt abgegebene Energie minimiert wird, und damit weniger Energie für die Herstellung der Eisenoxid-Rot-Pigmente erforderlich ist.

Es wurde nun ein Verfahren zur Herstellung von Eisenoxid-Rot-Pigmenten gefunden, das diese Aufgabe löst, sowie eine Vorrichtung bereitgestellt, in dem dieses Verfahren auch im industriellen Maßstab durchgeführt werden kann, umfassend die Umsetzung von zumindest
- Eisen und
- einer wässrigen Hämatit-Keimsuspension, enthaltend Hämatit-Keime, die eine Teilchengröße von 100 nm oder weniger und eine spezifische BET-Oberfläche von 40 m²/g bis 150 m²/g (gemessen nach DIN 66131) aufweisen, und
- einer Eisen(II)nitratlösung und
- zumindest einem ersten stickoxidhaltigem Stoffstrom mit einer Zusammensetzung von zumindest von 5-30 Gew.% O₂, 0,1-50 Gew.% NOₓ (berechnet als Gew.% NO₂), bevorzugt 1-50 Gew.% NOₓ (berechnet als Gew.% NO₂), und als Rest weitere Gase, wobei die Gewichtsprozente auf wasserfreies Gas bezogen sind und die Summe der Gewichtsprozente der Gase O₂, NOₓ (berechnet als Gew.% NO₂) und weitere Gase 100 Gew.% ergibt,
bei Temperaturen von 70 bis 120°C, bevorzugt von 70 bis 99°C, dadurch gekennzeichnet, dass der zumindest eine erste stickoxidhaltige Stoffstrom in die flüssige Reaktionsmischung eingeleitet wird, wobei eine Hämatit-Pigmentsuspension und ein zweiter stickoxidhaltiger Stoffstrom erzeugt wird, wobei der zweite stickoxidhaltige Stoffstrom zumindest teilweise zur Erzeugung des ersten stickoxidhaltigen Stoffstroms oder als erster stickoxidhaltiger Stoffstrom eingesetzt wird.

Typischerweise wird bei dem erfindungsgemäßen Verfahren zusätzlich dann Sauerstoff, bevorzugt in Form von gasförmigem O₂ oder Luft, der flüssigen Reaktionsmischung und/oder dem ersten stickoxidhaltigen Stoffstrom und/oder dem zweiten stickoxidhaltigen Stoffstrom zugegeben, wenn der Gehalt an O₂ im zweiten stickoxidhaltigen Stoffstrom so weit abnimmt, dass ein Gehalt an O₂ von 5 Gew.%, bevorzugt von 10 Gew.%, bezogen auf wasserfreies Gas, oder mehr erreicht oder der Gehalt an O₂ von 5 Gew.%, bevorzugt von 10 Gew.%, jeweils bezogen auf wasserfreies Gas, unterschritten wird, Dabei wird durch die Zugabe von Sauerstoff sichergestellt, dass der Gehalt an O₂, bevorzugt vorwiegend während der gesamten Reaktionszeit, im zweiten stickoxidhaltigen Stoffstrom 5 Gew.%, bevorzugt 10 Gew.%, bezogen auf wasserfreies Gas, nicht unterschreitet.

In einer bevorzugten Ausführungsform des erfindungsgemäßen Verfahrens wird pro 1000 kg hergestelltem Hämatit (gemessen als wasserfreies Fe₂O₃) von 50 bis 300 kg O₂, bevorzugt von 100 bis 200 kg O₂, ganz besonders bevorzugt von 120 bis 170 kg O₂ zugegeben, das heißt, dem ersten stickoxidhaltigen Stoffstrom und/oder dem zweiten stickoxidhaltigen Stoffstrom und/oder der flüssigen Reaktionsmischung zugeführt. Bei den aus dem Stand der Technik bekannten Penniman-Reaktionen mit Eisen(II)nitrat wird dagegen typischerweise pro 1000 kg hergestellten Hämatit (gemessen als wasserfreies Fe₂O₃) mehr als 1000 kg O₂, teilweise sogar mehr als 1200 kg O₂ oder mehr als 1400 kg O₂ eingesetzt.

Die Menge an "Sauerstoff, die bei dem Verfahren zugegeben werden", ist hierbei die Menge an O₂, die in den ersten stickoxidhaltigen Stoffstrom und/oder in den zweiten stickoxidhaltigen Stoffstrom und/oder in die flüssigen Reaktionsmischung als Gas eingeführt wird, gleichgültig, ob diese Menge mit einer Komponente des Reaktionsgemisches reagiert oder nicht.

In einer Ausführungsform wird die Umsetzung so lange durchgeführt, bis das Hämatit-Pigment den gewünschten Farbton aufweist. Der gewünschte Farbton wird bei Eisenoxid-Rotpigmenten üblicherweise in einer Lackabtestung mit einem thixotropierten langöligen Alkydharz (in Anlehnung an DIN EN ISO 11664-4:2011-07 und DIN EN ISO 787-25:2007) durchgeführt. Zur Prüfung der Farbwerte von anorganischen Buntpigmenten wird das Pigment in einer Bindemittelpaste auf Basis eines nichttrocknenden langöligen Alkydharz (L64) dispergiert. Die pigmentierte Paste wird in einen Pastenteller eingestrichen und anschließend im Vergleich zum Bezugspigment farbmetrisch ausgewertet. Dabei werden die Farbmaßzahlen und Farbabstände im angenähert gleichförmigen CIELAB-Farbenraum in Purton und Aufhellung ermittelt. Für den Farbton des Pigments stellen die a*- und b*-Werte in der Lackabtestung die am besten geeigneten Parameter dar. Beispiele von solchen Farbwerten, und wie sie erzielt werden, sind in der PCT/EP2015/070745 offenbart.

In einer weiteren Ausführungsform umfasst das erfindungsgemäße Verfahren die Abtrennung des Hämatit-Pigments von der Hämatit-Pigmentsuspension nach üblichen Methoden.

Die Umsetzung von Eisen, Hämatit-Keimsuspension und Eisen(II)nitratlösung in Gegenwart von zumindest einem stickoxidhaltigen Stoffstrom und gegebenenfalls Sauerstoff bei Temperaturen von 70 bis 120°C, bevorzugt von 70 bis 99°C, wird auch Pigmentaufbau genannt.

Die im erfindungsgemäßen Verfahren eingesetzten Eisen(II)nitratlösungen sind aus dem Stand der Technik bekannt. Hierzu wird auf die Beschreibung des Standes der Technik verwiesen. Typischerweise weisen diese Eisen(II)nitratlösungen Konzentrationen von 50 bis 150 g/l Fe(NO₃)₂ (Angabe Fe(NO₃)₂ bezogen auf wasserfreie Substanz) auf. Neben Fe(NO₃)₂ können die Eisen(II)nitrat-Lösungen auch Mengen von 0 bis 50 g/lFe(NO₃)₃ enthalten. Vorteilhaft sind jedoch möglichst niedrige Mengen an Fe(NO₃)₃.

Die im erfindungsgemäßen Verfahren eingesetzten wässrigen Hämatit-Keimsuspensionen und die darin enthaltenen Hämatit-Keime sind aus dem Stand der Technik bekannt. Hierzu wird auf die Beschreibung des Standes der Technik verwiesen.

Die in der wasserhaltigen Hämatit-Keimsuspension enthaltenen Hämatit-Keime umfassen solche mit einer Teilchengröße von 100 nm oder weniger und einer spezifische BET-Oberfläche von 40 m²/g bis 150 m²/g, (gemessen nach DIN 66131). Das Kriterium der Teilchengröße ist erfindungsgemäß erfüllt, wenn zumindest 90% der Hämatit-Keime eine Teilchengröße von 100 nm oder weniger, besonders bevorzugt von 30 nm bis 90 nm, aufweisen. Die im erfindungsgemäßen Verfahren eingesetzten wässrigen Hämatit-Keimsuspensionen umfassen typischerweise Hämatit-Keime mit einer runden, ovalen oder hexagonalen Teilchenform. Der feinteilige Hämatit weist typischerweise eine hohe Reinheit auf, beispielsweise mindestens 90%, bevorzugt mindestens 95%, bezogen auf wasserfreie Substanz.

Als Fremdmetalle sind in dem für die Herstellung der Hämatit-Keimsuspension eingesetzten Eisenschrott in der Regel Mangan, Chrom, Aluminium, Kupfer, Nickel, Kobalt, und/oder Titan in unterschiedlichsten Konzentrationen enthalten, die bei der Umsetzung mit Salpetersäure auch zu Oxiden oder Oxyhydroxiden gefällt und in den feinteiligen Hämatit eingebaut werden können. Typischerweise weisen die in der wasserhaltigen Hämatit-Keimsuspension enthaltenen Hämatit-Keime einen Mangangehalt von 0,1 bis 0,7 Gew.%, bevorzugt 0,4 bis 0,6 Gew.%, auf. Mit Keimen dieser Qualität lassen sich farbstarke rote Eisenoxidpigmente herstellen.

Als Eisen wird das erfindungsgemäße Verfahren gewöhnlich Eisen in Form von Draht, Blechen, Nägeln, Granalien oder groben Spänen eingesetzt. Dabei sind die einzelnen Teile von beliebiger Form und weisen üblicherweise eine Dicke (z.B. gemessen als Durchmesser eines Drahtes oder als Dicke eines Bleches) von ca. 0,1 Millimetern bis zu ca. 10 mm Millimetern auf. Die Größe von Drahtbündeln oder von Blechen, die in das Verfahren eingesetzt werden, bemisst sich üblicherweise nach praktikablen Gesichtspunkten. So muss der Reaktor mit diesem Einsatzmaterial ohne Schwierigkeiten befüllt werden können, was in der Regel durch ein Mannloch erfolgt. Solches Eisen wird unter anderem als Schrott, oder als Nebenprodukt in der Metallverarbeitungs-Industrie, beispielsweise Stanzbleche, erzeugt.

Das im erfindungsgemäßen Verfahren eingesetzte Eisen weist in der Regel einen Eisengehalt von >90 Gew% auf. Als Verunreinigungen treten in diesem Eisen üblicherweise Fremdmetalle wie z.B. Mangan, Chrom, Silizium, Nickel, Kupfer, und andere Elemente auf. Es kann jedoch auch ohne Nachteile Eisen mit einem höheren Reinheitsgrad eingesetzt werden. Typischerweise wird Eisen in einer Menge zwischen 20 und 150 g/l bezogen auf das Volumen der Reaktionsmischung zu Beginn der erfindungsgemäßen Umsetzung eingesetzt. In einer weiteren bevorzugten Ausführungsform wird das Eisen, bevorzugt in Form von Stanzblechen oder Drähten, auf der Eisenvorlage über deren Fläche mit einer bevorzugten Schüttdichte von kleiner 2000 kg/m³, besonders bevorzugt kleiner 1000 kg/m³ verteilt. Die Schüttdichte kann beispielsweise durch Biegen von Blechen zumindest einer Eisenqualität und/oder durch gezieltes Legen des Eisens realisiert werden. Dies führt dazu, dass typischerweise mehr als 90 Volumenprozent des unter der Eisenvorlage eingeblasenen stickoxidhaltigen Gases die Eisenvorlage passiert, ohne dass sich der stickoxidhaltige Stoffstrom unter der Eisenvorlage aufstaut.

Bei dem erfindungsgemäßen Verfahren entsteht die Hämatit-Pigmentsuspension und ein zweiter stickoxidhaltiger Stoffstrom. Dieser zweite stickoxidhaltige Stoffstrom weist typischerweise 1 bis 200 g/m³ nitrose Gase (berechnet als g/m³ NO₂, bezogen auf wasserfreies Gas) und/oder 0,5 bis 50 g/m³ N₂O (bezogen auf wasserfreies Gas) auf. Der Gehalt an nitrosen Gasen und Distickstoffmonoxid kann in diesen Stoffströmen in weiten Bereichen schwanken. Dieser zweite stickoxidhaltige Stoffstrom weist üblicherweise einen Wasseranteil auf, der üblicherweise der Wasserdampfsättigung bei der gegebenen Reaktionstemperatur entspricht. Beispielsweise beträgt der Wasseranteil im stickoxidhaltigen Stoffstrom ca. 50 Gew.% bei einer Reaktionstemperatur von 80°C. Da der zweite stickoxidhaltige Stoffstrom aus der wässrigen Reaktionsmischung entweicht, die üblicherweise eine Temperatur von 70 bis 120°C, bevorzugt von 70 bis 99°C aufweist, hat der zweite stickoxidhaltige Stoffstrom beim Austritt aus der wässrigen Reaktionsmischung dieselbe Temperatur. Nach dem Austritt aus der wässrigen Reaktionsmischung kommt der zweite stickoxidhaltige Stoffstrom in Kontakt mit Teilen der Reaktionsvorrichtung, die eine andere Temperatur, in der Regel eine niedrigere Temperatur, aufweisen. Dadurch kann es zur Kondensation des im zweiten stickoxidhaltigen Stoffstroms enthaltenen Wassers kommen, das in ihm entweder gasförmig oder dampfförmig vorliegt.

Dadurch ändert sich der Wassergehalt im zweiten stickoxidhaltigen Stoffstrom, und ggf. auch der Gehalt an darin gelöstem NOₓ und/oder N₂O. Deshalb wird im Zusammenhang mit dieser Erfindung der Gehalt an NOₓ und/oder N₂O in Gew.% bezogen auf wasserfreies Gas bestimmt und angegeben. Praktischerweise wird eine Probe des zu messenden Gases zunächst über eine Kühleinrichtung, beispielsweise eine mit Eiswasser gekühlte Gaswaschflasche, geleitet, sodass das getrocknete Gas eine Temperatur von maximal 40°C aufweist. Dabei sinkt der Wasseranteil typischerweise auf 40 bis 50 g Wasserdampf/m³ Luft Anschließend erfolgt die Messung der Gaszusammensetzung bezüglich der Komponenten NOₓ, O₂ und weiterer Gase, beispielsweise N₂O oder N₂. Weist ein stickoxidhaltiger Stoffstrom beispielsweise 20 Gew.% O₂, 30 Gew.% NO und 20 Gew.% N₂ (hier das einzige weitere Gas) auf, so wird die Zusammensetzung durch Umrechnung des Massenanteils von NO zu NO₂, durch Addition der einzelnen Massenanteile O₂, N₂ und NO₂ und Bezug der Massenanteile der einzelnen Gase zur Gesamtmasse des Gasgemisches angegeben als 17 Gew.% 02, 40 Gew.% NOx (berechnet auf NO₂) und 17 Gew.% weitere Gase. Die Bestimmung der Gewichtsanteile der einzelnen Gase wird im Abschnitt der Beschreibung "Beispiele und Methoden" näher beschrieben.

Der erste stickoxidhaltige Stoffstrom weist in einer Ausführungsform des erfindungsgemäßen Verfahrens von 1 bis 2000 g/m³ nitrose Gase (berechnet als g/m³ NO₂, bezogen auf wasserfreies Gas) und/oder von 1 bis 1000 g/m³ N₂O (bezogen auf wasserfreies Gas) auf. Der Gehalt an nitrosen Gasen und Distickstoffmonoxid kann in diesen Stoffstrom in weiten Bereichen schwanken. Die Messung und die Angaben der Gaszusammensetzung wird wie beim zweiten stickoxidhaltigen Stoffstrom beschrieben durchgeführt.

Der erste stickoxidhaltige Stoffstrom, der nach dem erfindungsgemäßen Verfahren in die flüssige Reaktionsmischung eingeleitet wird, kann entweder die gleiche Zusammensetzung wie der zweite stickoxidhaltige Stoffstrom oder eine davon unterschiedliche Zusammensetzung bezüglich der Gehalte an nitrosen Gasen und/oder N₂O und/oder Wasser und/oder übrigen Komponenten aufweisen.

Der erste stickoxidhaltige Stoffstrom kann in einer Ausführungsform des erfindungsgemäßen Verfahrens aus dem zweiten stickoxidhaltigen Stoffstrom resultieren, indem der zweite stickoxidhaltige Stoffstrom, der aus der Reaktionsmischung entweicht, direkt in die flüssige Reaktionsmischung zurückgeführt wird. Die direkte Zurückführung kann beispielsweise über mit den Ein- und Auslässen kommunizierenden Leitungen des Reaktionsbehälters, in dem das erfindungsgemäße Verfahren durchgeführt wird, erfolgen. Dafür ist ein geeignetes Mittel erforderlich, dass den Stoffstrom transportiert und gegebenenfalls komprimiert. Geeignete Mittel sind beispielsweise Fördereinheiten wie Pumpen, Kompressoren oder selbstansaugende Ejektoren. Diese Mittel sind in unterschiedlichen Ausführungsformen nachfolgend detaillierter beschrieben. Hierfür geeignete Mittel bewirken, dass der erste stickoxidhaltige Stoffstrom mit einem Druck in die flüssige Reaktionsmischung eingeleitet wird, der höher ist als der hydrostatische Druck der Reaktionsmischung selbst.

Der erste stickoxidhaltige Stoffstrom kann in einer weiteren Ausführungsform des erfindungsgemäßen Verfahrens zumindest teilweise aus einem zweiten stickoxidhaltigen Stoffstrom resultieren, der aus einem weiteren Reaktionsbehälter entweicht, in dem eine andere Reaktion von mindestens Eisen und Eisen(II)nitratlösung, üblicherweise ein Pigmentaufbau zur Herstellung einer Hämatit-Pigmentsuspension, oder jede anderen Reaktion, die einen stickoxidhaltigen Stoffstrom erzeugt, durchgeführt wird. Dabei kann die andere Reaktion zur gleichen Zeit oder zeitlich versetzt zum erfindungsgemäßen Verfahren erfolgen.

Der erste stickoxidhaltige Stoffstrom kann in einer weiteren Ausführungsform des erfindungsgemäßen Verfahrens aus einem zweiten stickoxidhaltigen Stoffstrom resultieren, der aus einem Reaktionsbehälter entweicht, in dem eine andere Reaktion von mindestens Eisen und Salpetersäure, üblicherweise der Herstellung einer Eisen(II)nitratlösung oder einer Hämatit-Keimsuspension, durchgeführt wird. Dabei kann die andere Reaktion zur gleichen Zeit oder zeitlich versetzt zum erfindungsgemäßen Verfahren erfolgen.

In einer weiteren Ausführungsform wird der zweite stickoxidhaltige Stoffstrom, der bei dem Pigmentaufbau entsteht, vor dem Einleiten in den Reaktor, in dem das erfindungsgemäße Verfahren zur Herstellung der Hämatit-Pigmentsuspension durchgeführt wird, zuvor auf einen erhöhten Druck komprimiert, um bei der Einleitung als erster stickoxidhaltiger Stoffstrom den hydrostatischen Druck innerhalb des gleichen oder anderen Reaktors, in dem das erfindungsgemäße Verfahren zur Herstellung der Hämatit-Pigmentsuspension durchgeführt wird, zu überwinden. Der hydrostatische Druck der Reaktionsmischung wird durch den Abstand der Begasungseinheit von der Oberfläche der Reaktionsmischung und der Dichte der Reaktionsmischung bedingt und liegt typischerweise bei einen Abstand von 10 Meter und einer Dichte von 1 kg/dm³ bei 1000 hPa. Typische Dichten der Reaktionsmischung des erfindungsgemäßen Verfahrens liegen im Bereich von 1,0 bis 1,3 kg/dm³.

Im erfindungsgemäßen Verfahren wird Eisen, Eisen(II)nitrat und Hämatitkeim-Suspension mit einem ersten stickoxidhaltigen Stoffstrom und gegebenenfalls Sauerstoff, bevorzugt in Form von gasförmigem O₂ oder Luft, umgesetzt. In einer Ausführungsform des erfindungsgemäßen Verfahrens stammt der Sauerstoff aus einer externen Quelle, beispielsweise als sogenannte Fremdluft. Die externe Quelle ist erfindungsgemäß definiert als eine von der Herstellung des Hämatit-Pigments unabhängige Quelle, beispielsweise eine Gasflasche, eine Ansaugvorrichtung für Luft, ein Kompressor für Luft, oder die Umgebung des Reaktors selbst. Der Sauerstoff aus der externen Quelle wird in den Gasraum und/oder in die flüssige Reaktionsmischung innerhalb des Reaktors über geeignete Mittel befördert.

Die Zugabe des Sauerstoffs, beispielsweise in Form von Luft, kann sowohl kontinuierlich als auch diskontinuierlich erfolgen. Bei einer diskontinuierlichen Fahrweise wird der erste stickoxidhaltige Stoffstrom und gegebenenfalls zusätzlich Sauerstoff in die Reaktionsmischung eingeleitet. Hierbei wird beispielsweise die Sauerstoffkonzentration im zweiten stickoxidhaltigen Stoffstrom gemessen und, sobald dieser kleiner als 10 Gew.%, bevorzugt kleiner als 5 Gew.%, (bezogen auf wasserfreies Gas) beträgt, Sauerstoff in den ersten stickoxidhaltigen Stoffstrom und/oder in den zweiten stickoxidhaltigen Stoffstrom und/oder in die flüssigen Reaktionsmischung zugegeben, bis der Sauerstoffgehalt im zweiten stickoxidhaltigen Stoffstrom mindestens 5% Gew.%, bevorzugt mindestens 10% Gew.% (bezogen auf wasserfreies Gas) beträgt.

Bei einer kontinuierlichen Fahrweise werden gleichzeitig der erste stickoxidhaltige Stoffstrom in die flüssige Reaktionsmischung und Sauerstoff in den ersten stickoxidhaltigen Stoffstrom und/oder in den zweiten stickoxidhaltigen Stoffstrom und/oder in die flüssige Reaktionsmischung zugegeben, sodass gemittelt über die gesamte Reaktionszeit der Sauerstoffgehalt im zweiten stickoxidhaltigen Stoffstrom mindestens 2 Gew.%, bevorzugt mindestens 5 Gew.%, besonders bevorzugt mindestens 10 Gew.%, (bezogen auf wasserfreies Gas) beträgt.

Das erfindungsgemäße Verfahren kann dabei auch als Mischform der kontinuierlichen und diskontinuierlichen Fahrweise durchgeführt werden.

Das erfindungsgemäße Verfahren kann entweder ohne eine zusätzliche mechanische Durchmischung, beispielsweise ohne Propellerrührer, und / oder ohne eine zusätzliche hydraulische Durchmischung, beispielsweise ohne Umpumpung der flüssigen Reaktionsmischung, durchgeführt. In einer weiteren bevorzugten Ausführungsform wird das erfindungsgemäße Verfahren mit einer mechanischen Durchmischung der flüssigen Reaktionsmischung, beispielsweise mittels eines Propellerrührers, und / oder durch eine zusätzliche hydraulische Durchmischung der flüssigen Reaktionsmischung, beispielsweise durch eine Umpumpung der flüssigen Reaktionsmischung, durchgeführt.

Die nach dem erfindungsgemäßen Verfahren hergestellten Eisenoxid-Rot-Pigmente weisen die Modifikation Hämatit (α-Fe₂O₃) auf und werden daher auch im Zusammenhang mit dieser Erfindung Hämatit-Pigmente genannt.

Die Erfindung umfasst weiterhin zur Durchführung des erfindungsgemäßen Verfahrens geeignete Vorrichtungen. Diese werden nachstehend anhand der Figuren 1 bis 5 näher erläutert.

In den Figuren 1 und 2 ist die Darstellung einer erfindungsgemäßen Vorrichtung wiedergegeben, bei der die Rückführung des stickoxidhaltigen Stoffstroms und die Zuführung von sauerstoffhaltigem Gas über ein Mehrwegeventil erfolgt.

In Figur 3 ist die Darstellung einer erfindungsgemäßen Vorrichtung wiedergegeben, bei der die Rückführung des stickoxidhaltigen Stoffstroms und die Zuführung von sauerstoffhaltigem Gas über ein Mehrwegeventil mittels eines Abgaskompressors erfolgt.

In Figur 4 ist die Darstellung einer erfindungsgemäßen Vorrichtung wiedergegeben, bei der die Rückführung des stickoxidhaltigen Stoffstroms mittels eines selbstansaugenden Ejektors erfolgt, der mit Direktdampf betrieben wird.

In Figur 5 ist die Darstellung einer erfindungsgemäßen Vorrichtung wiedergegeben, bei der die Rückführung des stickoxidhaltigen Stoffstroms mittels eines selbstansaugenden Ejektors erfolgt, der mit Hämatit-Pigmentsuspension betrieben wird.

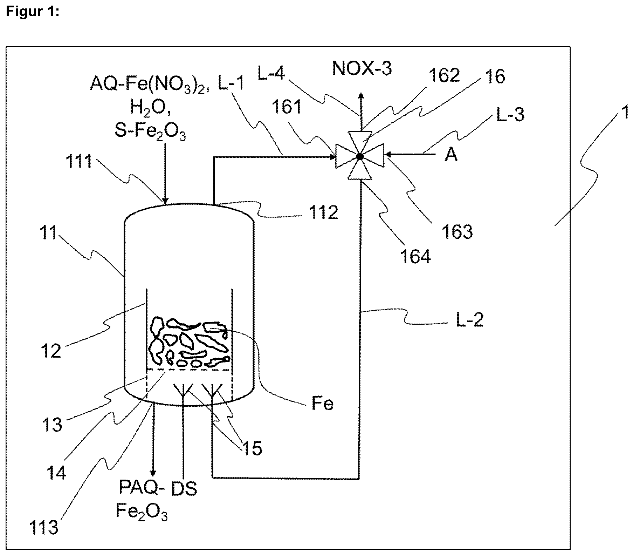

In den Figuren 1 bis 5 bedeuten:
- A: sauerstoffhaltiges Gas
- Fe: Eisen
- AQ-Fe(NO₃)₂: Eisen(II)nitrat-Lösung
- S-Fe₂O₃: Hämatit-Keimsuspension
- PAQ-Fe₂O₃: Hämatit-Pigmentsuspension
- H₂O: Wasser
- NOX-1: erster stickoxidhaltiger Stoffstrom zur Einleitung in die Reaktionsmischung
- NOX-2: zweiter stickoxidhaltiger Stoffstrom (Abgas aus der Herstellung der Hämatit-Pigmentsuspension)
- NOX-3: dritter stickoxidhaltiger Stoffstrom (Abgas aus der Herstellung der Hämatit-Pigmentsuspension) zur Ableitung in die Umgebungsluft oder zur Abgasreinigung
- DS: Direktdampf zur Beheizung

- L-1 bis L-4: Leitungen 1 bis 4
- 1: Reaktor zur Herstellung von Hämatit-Pigmentsuspension
- 11: Reaktionsbehälter
- 12: Äußere Begrenzung
- 13: Halterung für 12 und 14
- 14: Vorlage für Eisen
- 15: Begasungseinheit
- 16: Mehrwegeventil
- 17: Mehrwegeventil
- 18: Abgaskompressor
- 19: Selbstansaugender Ejektor, dampfbetrieben
- 20: Selbstansaugender Ejektor, suspensionsbetrieben
- 21: Pumpe
- 22: Einleitungseinheit für PAQ-Fe₂O₃
- 111: Einlass für Eisen(II)nitrat-Lösung, Hämatit-Keimsuspension und gegebenenfalls Wasser
- 112: Auslass für NOX-1
- 113: Auslass für Hämatit-Pigmentsuspension
- 114: Auslass für NOX-3
- 115: Auslass für PAQ-Fe₂O₃
- 161: Einlass für NOX-2
- 162: Auslass für NOX-3
- 163: Einlass für A
- 164: Auslass für NOX-1
- 171: Einlass für NOX-2
- 172: Einlass für A
- 173: Auslass für NOX-1
- 181: Einlass für NOX-1
- 182: Einlass für NOX-1
- 191: Einlass für NOX-2
- 192: Einlass für DS
- 193: Auslass für NOX-1
- 201: Einlass für NOX-1
- 202: Einlass für PAQ-Fe₂O₃
- 203: Auslass für PAQ-Fe₂O₃
- 211: Einlass für PAQ-Fe₂O₃
- 212: Auslass für PAQ-Fe₂O₃

Reaktor 1 umfasst typischerweise einen oder mehrere Reaktionsbehälter aus Werkstoffen, die gegen die Einsatzstoffe beständig sind. Einfach Reaktionsbehälter können z.B. gemauerte oder geflieste in die Erde eingelassene Behälter sein. Die Reaktoren umfassen beispielsweise auch Behälter aus Glas, salpetersäurebeständigem Kunststoffen, wie z.B. Polytetrafluorethylen (PTFE), Stahl, z.B. emaillierter Stahl, kunststoff- oder lackbeschichteter Stahl, Edelstahl mit der Werkstoffnummer 1.44.01. Die Reaktionsbehälter können offen oder geschlossen sein. In bevorzugten Ausführungsformen der Erfindung sind die Reaktionsbehälter geschlossen. Die Reaktionsbehälter sind typischerweise für Temperaturen zwischen 0 und 150°C und für Drucke von 0,05 MPa bis 1,5 MPa ausgelegt.

Eine Ausführungsform eines Reaktors 1 ist in Figur 1 wiedergegeben. Reaktor 1 weist zumindest Reaktionsbehälter 11, äußere Begrenzung 12, Vorlage für Eisen 14, Halterung 13 für 12 und 14, Begasungseinheit 15 für den zumindest einen ersten stickoxidhaltigen Stoffstrom **NOX-1,** Einlass **111** für Eisen(II)nitrat-Lösung, Hämatit-Keimsuspension, und gegebenenfalls Wasser, Auslass 112 für zumindest einen zweiten stickoxidhaltigen Stoffstrom **NOX-2,** und Auslass 113 für die Hämatit-Pigmentsuspension **PAQ-Fe₂O₃** auf. Weiterhin weist Reaktor 1 zumindest ein Mehrwegeventil 16, Einlass **161** für **NOX-2,** Einlass **163** für **A,** Auslass **164** für **NOX-1,** und gegebenenfalls Auslass **162** für **NOX-3** auf. In einer Ausführungsform kann Auslass 162 anstatt am Mehrwegeventil auch an einer anderen Stelle des Reaktors 1 angebracht sein, an der der stickoxidhaltige Stoffstrom aus dem Reaktionssystem ausgeschleust werden kann.

Das Mehrwegeventil 16 ist beispielsweise ausgestaltet als Ventil, das zwei Eingänge und zwei Ausgänge aufweist und in dem die Durchflussgeschwindigkeiten von je zwei einströmenden und je zwei ausströmenden Stoffströmen geregelt und wobei die Stoffströme dabei gemischt werden. Das Mehrwegeventil 16 kann dabei als eine Einheit oder als mehrere miteinander kombinierte Einheiten ausgeführt sein, um die erforderliche Funktion zu erfüllen.

In einer Ausführungsform ist die äußere Begrenzung 12 typischerweise ausgestaltet durch eine undurchlässige Wand, durch eine mit Öffnungen versehene Wand, durch Gitterstäbe, durch ein Sieb oder eine durch Kombination aus diesen Elementen. Mögliche Öffnungen in der äußere Begrenzung 12 sollten so ausgelegt sein, dass ein Durchfallen von Eisen verhindert wird. Bevorzugt wird eine undurchlässige Wand, zumindest im unteren Bereich, beispielsweise 10-50% der Höhe der Begrenzung 12. Im oberen Bereich, beispielsweise von 50% bis 90% der Höhe der Begrenzung 12, gemessen von der Vorlage für Eisen 14, können seitliche Öffnungen, z.B. in Form von Gittern, Löchern angebracht werden, die ein Herabfallen von Eisen verhindern und einen Suspensionsaustausch ermöglichen. Typischerweise ist die Begrenzung so ausgelegt, dass bei der Durchführung des erfindungsgemäßen Verfahrens höchstens 10 Vol.% des stickoxidhaltigen Stoffstroms von der Innenseite der äußeren Begrenzung 12 durch die Öffnungen der äußeren Begrenzung 12 auf die andere Seite der äußeren Begrenzung 12 gelangen. In der Regel wird dies jedoch durch den Mammutpumpen-Effekt verhindert, der durch das nach oben strömende Gas in dem inneren Raum, der durch die äußere Begrenzung 12 gebildet wird, verursacht wird.

Die Vorlage für Eisen **14** ermöglicht einen Austausch von zumindest der Reaktionsmischung und des zumindest einen stickoxidhaltigen Stoffstroms, beispielsweises des zumindest einen ersten stickoxidhaltigen Stoffstroms **NOX-1,** durch in der Vorlage vorhandene Öffnungen. Typische Ausführungsformen für die Vorlage für Eisen **14** stellen Siebböden, Lochböden oder Gitter dar. Das Verhältnis zwischen der kumulierten Fläche an Öffnungen und der gesamten Fläche der Vorlage für Eisen ist typischerweise zumindest 0,1. Der obere Wert des Verhältnisses zwischen der kumulierten Fläche an Öffnungen und der gesamten Fläche definiert sich an den technischen Rahmenbedingungen, die durch das auf der Vorlage für Eisen **14** liegende Eisen vorgegeben sind, beispielsweise Größe und Form der Eisenteile und Gewicht der Eisenschüttung. Bevorzugt ist das Verhältnis zwischen der kumulierten Fläche an Öffnungen und der gesamten Fläche der Vorlage für Eisen **14** so groß wie möglich. Die für das Durchströmen der Reaktionsmischung durch die Vorlage für Eisen erforderlichen Öffnungen sind typischerweise für die Wahl des Eisenrohstoffs geeignet. Ein Durchfallen des Eisens durch die Vorlage wird typischerweise dadurch weitestgehend vermieden. Die Vorlage für Eisen **14** kann vom Durchmesser dem Reaktorinnendurchmesser entsprechen, oder auch kleiner ausgelegt werden. Beispielsweise beträgt das Verhältnis zwischen dem maximalen Durchmessers der Vorlage für Eisen **14** zum maximalen Reaktorinnendurchmesser 0,5 bis 0,9. Ist der Durchmesser der Vorlage für Eisen **14** kleiner als der Reaktorinnendurchmesser, wird bevorzugt seitlich an der Vorlage für Eisen **14** eine Wandung, beispielsweise äußere Begrenzung **12,** angebracht, die ein Herabfallen von Eisen verhindert. Diese Wandung kann Suspensions-durchlässig, beispielsweise ausgeführt als Gitter, oder Suspensions-undurchlässig sein und beispielsweise die Form einer Röhre oder eines oben offenen Quaders aufweisen.

In einer Ausführungsform ist die Auflage **14** für Eisen typischerweise ein Sieb oder Gitter, das mit der Halterung **13** und der äußeren Begrenzung **12** mechanisch verbunden ist.

In einer weiteren Ausführungsform ist die Halterung **13** eine teilweise oder ganz flüssigkeits-und/oder gasundurchlässige Wand, bevorzugt teilweise oder ganz bestehend aus einem Gitter oder Sieb, dessen Öffnungen so dimensioniert sind, dass die Reaktionsmischung, die die Hämatit-Keimsuspension und/oder die Hämatit-Pigmentsuspension enthält, diese Wand passiert.

In einer weiteren Ausführungsform besteht die Halterung **13** aus Streben, die mit dem Boden oder der Seitenwand des Reaktionsbehälters 11 verbunden sind.

In einer Ausführungsform befindet sich auf Höhe und/oder unterhalb der Vorlage für Eisen **14** eine Begasungseinheit **15** zum Einleiten von unter Druck stehendem Wasserdampf **DS,** auch Direktdampf genannt, zum direkten Beheizen der Reaktionsmischung und besteht beispielsweise aus einem oder mehreren durchbohrten Rohrleitungen, ringförmigen Rohrleitungen, sternförmig angebrachten Rohrleitungen oder Einstoff- oder Zweistoffstrahlern, mit denen der Direktdampf zum Heizen und Temperaturhalten in die Reaktionsmischung eingebracht werden kann. Die Begasungseinheit **15** kann auch in die Vorlage für Eisen **14** integriert sein. Die Integration der Begasungseinheit **15** in die Vorlage für Eisen **14** wird beispielsweise dadurch ausgeführt, dass die Begasungseinheit direkt mit der Vorlage mechanisch verbunden wird oder als ein Gitter aus durchlöcherten Röhren, das gleichzeitig als Vorlage für Eisen ausgestaltet wird.

In einer Ausführungsform kann die Begasungseinheit **15** zum Einleiten von Direktdampf anstatt unterhalb oder in Höhe der Vorlage für Eisen **14** auch an einer anderen Stelle des Reaktors 1 angebracht sein, an der der Direktdampf in die Reaktionsmischung eingeschleust werden kann.

In einer weiteren Ausführungsform befinden sich die oberen Grenzen der Begasungseinheiten **15** in der unteren Hälfte, bevorzugt im unterem Drittel, der inneren Höhenausdehnung des Reaktionsbehälters 11.

In der Ausführungsform gemäß Figur 1 ist die Begasungseinheit **15** zum Einleiten von **NOX-1** sowie die Begasungseinheit **15** zum Einleiten von Direktdampf **DS** unter der Vorlage **14** angebracht. Dies wird praktisch so ausgestaltet, dass größer gleich oder mehr als 90 Volumenprozent des ersten stickoxidhaltigen Stoffstroms **NOX-1** durch die Vorlage für Eisen **14** und durch das Eisen Fe und nur weniger als 10 Volumenprozent des ersten stickoxidhaltigen Stoffstroms **NOX-1** durch die Halterung **13** und dann zwischen der Wand des Reaktionsbehälters **11** und der äußeren Begrenzung der Begasungsfläche **12** strömen. Durch den Eintrag des ersten stickoxidhaltigen Stoffstroms **NOX-1** in die flüssige Reaktionsmischung unterhalb der Vorlage **14** entsteht ein in Richtung der Oberfläche der Reaktionsmischung gerichteter Gasstrom, der zur Konvektion der Reaktionsmischung an dem sich auf der Vorlage **14** befindlichem Eisen vorbei führt, der auch Mammutpumpeneffekt genannt wird. Die flüssige Reaktionsmischung wird durch den nach oben gerichteten Gasstrom über den Rand der äußeren Begrenzung **12** getrieben. Während das Gas nach oben aus Reaktionsmischung entweicht, strömt die flüssige Reaktionsmischung in dem Raum zwischen dem Rand der äußeren Begrenzung **12** und der Innenwand des Reaktionsbehälters **11** wieder nach unten. Dadurch entsteht im Reaktionsbehälter ein kreisförmiger Strom aus flüssiger Reaktionsmischung. Die Halterung **13** weist typischerweise Öffnungen auf, durch die die flüssige Reaktionsmischung wieder in Richtung Vorlage für Eisen **14** strömen kann.

Der in die Reaktionsmischung einströmende erste stickoxidhaltige Stoffstrom **NOX-1** löst sich teilweise in der Reaktionsmischung. Die in der Reaktionsmischung gelösten Anteile des ersten stickoxidhaltigen Stoffstroms **NOX-1** reagieren teilweise mit den anderen Komponenten der Reaktionsmischung, wodurch auch in der Reaktionsmischung gelöste Ammoniumverbindungen und/oder Stickoxide entstehen. Ein Teil der Stickoxide reagiert wiederum mit den Reaktionskomponenten. Ein Teil des ersten stickoxidhaltigen Stoffstroms **NOX-1** und die während der Reaktion entstehenden Stickoxide verlassen die Reaktionsmischung als zweiter stickoxidhaltiger Stoffstrom **NOX-2.**

Der Auslass 112 des Reaktionsbehälters 11 ist über eine Leitung L-1 kommunizierend mit dem Einlass 161 des Mehrwegeventils 16 verbunden. Der Auslass 164 des Mehrwegeventils 16 ist über eine Leitung L-2 kommunizierend mit der Begasungseinheit 15 verbunden. Dadurch kann der zweite stickoxidhaltige Stoffstrom **NOX-2** als erster stickoxidhaltiger Stoffstroms **NOX-1** über die Begasungseinheit 15 in die Reaktionsmischung zurückgeführt werden. Gegebenenfalls kann über den Einlass 163 ein sauerstoffhaltiges Gas A dem zweiten stickoxidhaltigen Stoffstrom **NOX-2** beigemischt werden. Dadurch ändert sich der Sauerstoffgehalt im ersten stickoxidhaltigen Stoffstrom **NOX-1.** Gegebenenfalls kann auch ein dritter stickoxidhaltiger Stoffstrom **NOX-3** aus dem Reaktionsgemisch entfernt und gegebenenfalls an die Umgebungsluft oder an eine Abgasreinigungsvorrichtung abgegeben werden.

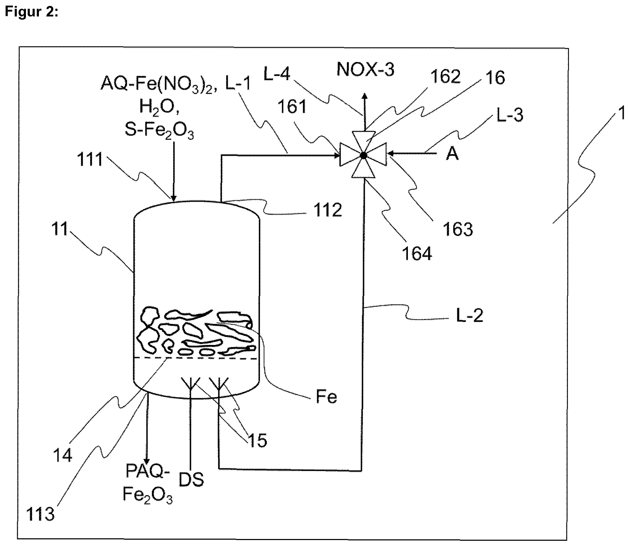

Eine weitere Ausführungsform eines Reaktors 1 ist in Figur 2 wiedergegeben. Diese Ausführungsform unterscheidet sich von der Ausführungsform gemäß Figur 1 dadurch, dass die Vorlage für Eisen 14 im vollen Umfang an der Innenwand des Reaktorbehälters 11 verbunden ist und somit die äußere Begrenzung 12 und die Halterung 13 für 12 und 14 entfallen kann.

Die anderen Merkmale dieser Ausführungsform sind ansonsten mit denen der Ausführungsform gemäß Figur 1 identisch.

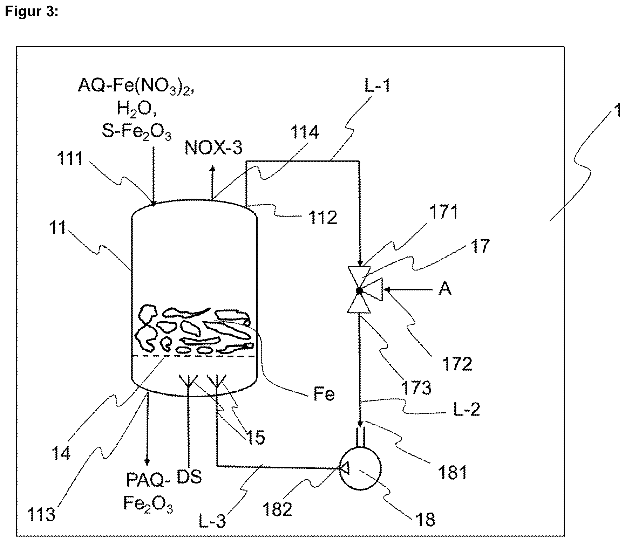

Eine weitere Ausführungsform eines Reaktors 1 ist in Figur 3 wiedergegeben.

Reaktor 1 weist zumindest Reaktionsbehälter 11, Vorlage für Eisen 14, Begasungseinheit 15 für den zumindest einen stickoxidhaltigen Stoffstrom **NOX-1,** Einlass **111** für Eisen(II)nitratLösung, Hämatit-Keimsuspension, und gegebenenfalls Wasser, Auslass 112 für einen stickoxidhaltigen Stoffstrom **NOX-2,** Auslass **113** für die Hämatit-Pigmentsuspension PAQ-**Fe₂O₃** und Auslass **114** für **NOX-3** auf. Weiterhin weist Reaktor 1 zumindest Mehrwegeventil 17, Einlass **171** für **NOX-2,** Einlass **172** für **A,** und Auslass **173** für **NOX-1,** Abgaskompressor 18, Einlass **181** für **NOX-1,** und Auslass **182** für **NOX-1,** auf. In einer Ausführungsform kann Auslass 114 anstatt am Reaktionsbehälter 11 auch an einer anderen Stelle des Reaktors 1 angebracht sein, an der der dritte stickoxidhaltige Stoffstrom aus dem Reaktionssystem ausgeschleust werden kann.

Abgaskompressor 18 dient zur Komprimierung des ersten stickoxidhaltigen Stoffstroms **NOX-1,** um eine bessere Regulierung des Druckes zu ermöglichen, mit dem der ersten stickoxidhaltigen Stoffstroms **NOX-1** über die Begasungseinheit 15 in die Reaktionsmischung geleitet werden kann. Ein Abgaskompressor, auch Verdichter genannt, kann beispielsweise als Kolbenverdichter, Schraubenverdichter, Turboverdichter, Membranverdichter, Roots-Gebläse oder über ein sonstiges Mittel ausgeführt sein, das den Druck des ersten stickoxidhaltigen Stoffstroms **NOX-1** dermaßen erhöht, sodass es den hydrostatischen Druck der flüssigen Reaktionsmischung überschreitet. Gegebenenfalls kann vor, im oder hinter dem Verdichter ein Kondensatabscheider angebracht werden, der auskondensierte Flüssigkeit vom Gasstrom abtrennt. Weiterhin kann vor dem Abgaskompressor **18** das Abgas zur Verhinderung von Kondensation beheizt werden, oder anteilig der Dampfgehalt durch Kühler herauskondensiert werden. Je nach verwendetem Verdichter-Typ ist dies erforderlich oder auch nicht.

Der Auslass **112** ist über eine Leitung **L-1** kommunizierend mit dem Einlass **171** des Mehrwegeventils **17** verbunden. Der Auslass **173** des Mehrwegeventils **17** ist über eine Leitung **L-2** kommunizierend mit dem Einlass **183** des Abgaskompressors **18** verbunden. Der Auslass **182** des Abgaskompressors **18** ist über eine Leitung **L-3** kommunizierend mit der Begasungseinheit **15** verbunden. Dadurch kann der zweite stickoxidhaltige Stoffstrom **NOX-2** als erster stickoxidhaltiger Stoffstroms **NOX-1** nach Kompression durch den Abgaskompressor **18** über die Begasungseinheit **15** in die Reaktionsmischung zurückgeführt werden. Gegebenenfalls kann über den Einlass **172** des Mehrwegeventils **17** ein sauerstoffhaltiges Gas **A** dem zweiten stickoxidhaltigen Stoffstrom **NOX-2** beigemischt werden. Dadurch ändert sich der Sauerstoffgehalt im ersten stickoxidhaltigen Stoffstrom **NOX-1.** Gegebenenfalls kann auch ein dritter stickoxidhaltiger Stoffstrom **NOX-3** aus dem Reaktionsgemisch über den Auslass **114** entfernt und gegebenenfalls an die Umgebungsluft oder an eine Abgasreinigungsvorrichtung abgegeben werden. In einer Ausführungsform gemäß Figur 3 kann eine Begasungseinheit **15** zum Einleiten von Direktdampf **DS** zum direkten Beheizen der Reaktionsmischung vorhanden sein. In einer bevorzugten Ausführungsform gemäß Figur 3 ist die Begasungseinheit **15** zum Einleiten von Direktdampf **DS** unterhalb der Eisenvorlage **14** angebracht. Der Direktdampf kann in weiteren Ausführungsformen an einer anderen Stelle des Reaktors **1** in die flüssige Reaktionsmischung eingeleitet werden.

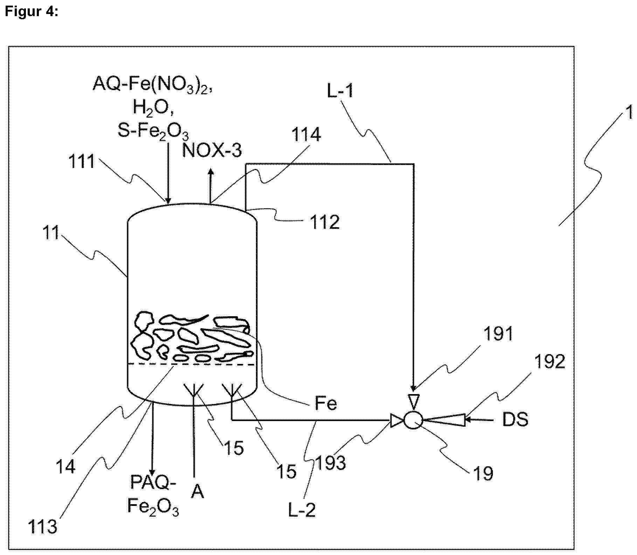

Eine weitere Ausführungsform eines Reaktors **1** ist in Figur 4 wiedergegeben.

Reaktor **1** weist zumindest Reaktionsbehälter **11,** Vorlage für Eisen **14,** Begasungseinheit **15** für den ersten stickoxidhaltigen Stoffstrom **NOX-1,** Begasungseinheit **15** für das sauerstoffhaltige Gas **A,** Einlass **111** für Eisen(II)nitrat-Lösung, Hämatit-Keimsuspension, und gegebenenfalls Wasser, Auslass **112** für den zweiten stickoxidhaltigen Stoffstrom **NOX-2,** Auslass **113** für die Hämatit-Pigmentsuspension **PAQ-Fe₂O₃** und Auslass **114** für den dritten stickoxidhaltigen Stoffstrom **NOX-3** auf. Weiterhin weist Reaktor **1** zumindest einen dampfbetriebenen Selbstansaugenden Ejektor **19,** Einlass **191** für **NOX-2,** Einlass **192** für unter Druck stehenden Wasserdampf **DS,** und Auslass **193** für den komprimierten **NOX-1,** auf. In einer Ausführungsform kann Auslass **114** anstatt am Reaktionsbehälter **11** auch an einer anderen Stelle des Reaktors **1** angebracht sein, an der der dritte stickoxidhaltige Stoffstrom aus dem Reaktionssystem ausgeschleust werden kann.

Der Auslass **112** ist über eine Leitung **L-1** kommunizierend mit dem Einlass **191** des dampfbetriebenen Selbstansaugenden Ejektors **19** verbunden. Der Direktdampf **DS** wird über den Einlass **192** in den selbstansaugenden Ejektor **19** eingespeist. Der Auslass **193** des Selbstansaugenden Ejektors **19** ist über eine Leitung **L-2** kommunizierend mit der Begasungseinheit **15** verbunden. Gegebenenfalls kann der dritte stickoxidhaltige Stoffstrom **NOX-3** aus dem Reaktionsgemisch über den Auslass **114** entfernt und gegebenenfalls an die Umgebungsluft oder an eine Abgasreinigungsvorrichtung abgegeben werden. Der dampfbetriebene selbstansaugende Ejektor **19** saugt den zweiten stickoxidhaltigen Stoffstrom **NOX-2** an, wobei der zweite stickoxidhaltige Stoffstrom **NOX-2** mit Dampf vermischt und durch den Druck des Direktdampfs komprimiert wird. In einer weiteren Ausführungsform kann der zweite stickoxidhaltige Stoffstrom **NOX-2** zuerst durch ein geeignetes Mittel auf einen Druck oberhalb des Heizdampfdruckes (z.B. 6 bar) komprimiert und danach mit dem Direktdampf vermischt werden. Danach wird der komprimierte, mit Direktdampf vermischte stickoxidhaltige Stoffstrom als erster stickoxidhaltiger Stoffstrom **NOX-1** in die Reaktionsmischung im Reaktionsbehälter **11** über ein geeignetes Mittel eingespeist. In einer weiteren Ausführungsform kann das sauerstoffhaltige Gas **A** auch an einer anderen Stelle des Reaktors **1** über eine geeignete Begasungseinheit in die flüssige Reaktionsmischung oder in den Gasraum eingespeist werden.

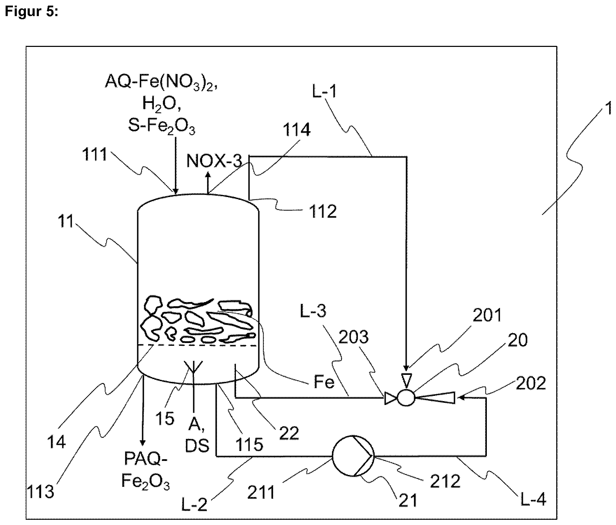

Eine weitere Ausführungsform eines Reaktors **1** ist in Figur 5 wiedergegeben.

Reaktor **1** weist zumindest Reaktionsbehälter **11,** Vorlage für Eisen **14,** eine oder mehrere Begasungseinheiten **15** für das sauerstoffhaltige Gas **A** und für Direktdampf **DS,** Einlass **111** für Eisen(II)nitrat-Lösung, Hämatit-Keimsuspension, und gegebenenfalls Wasser, Auslass **112** für den zweiten stickoxidhaltigen Stoffstrom **NOX-2,** Auslass **113** für die Hämatit-Pigmentsuspension **PAQ-Fe₂O₃** und Auslass **114** für den dritten stickoxidhaltigen Stoffstrom **NOX-3** auf. Weiterhin weist Reaktor **1** zumindest Auslass **115** für die Hämatit-Pigmentsuspension **PAQ-Fe₂O,** suspensionsbetriebenen Selbstansaugenden Ejektor **20**, Einlass **201** für **NOX-2,** Einlass **202** für die Hämatit-Pigmentsuspension **PAQ-Fe₂O₃,** und Auslass **203** für die mit dem den zweiten stickoxidhaltigen Stoffstrom **NOX-2** vermischte Hämatit-Pigmentsuspension **PAQ-Fe₂O₃,** auf. In einer Ausführungsform kann Auslass **114** anstatt am Reaktionsbehälter **11** auch an einer anderen Stelle des Reaktors **1** angebracht sein, an der der dritte stickoxidhaltige Stoffstrom aus dem Reaktionssystem ausgeschleust werden kann. Die Hämatit-Pigmentsuspension **PAQ-Fe₂O₃** wird mittels einer Pumpe **21** aus dem Reaktionsbehälter **11** zum suspensionsbetriebenen Selbstansaugenden Ejektor **20** gefördert.

Der Auslass **112** ist über eine Leitung **L-1** kommunizierend mit dem Einlass **201** des suspensionsbetriebenen Selbstansaugenden Ejektors **20** verbunden. Der Auslass **203** des suspensionsbetriebenen Selbstansaugenden Ejektors **20** ist über eine Leitung **L-3** kommunizierend mit der Einleitungseinheit **22** für **PAQ-Fe₂O₃** verbunden. Der Auslass **212** der Pumpe 21, ist über Leitung **L-4** kommunizierend mit dem Einlass **202** des suspensionsbetriebenen Selbstansaugenden Ejektors **20** verbunden. Gegebenenfalls kann der dritte stickoxidhaltige Stoffstrom **NOX-3** aus dem Reaktionsgemisch über den Auslass **114** entfernt und gegebenenfalls an die Umgebungsluft oder an eine Abgasreinigungsvorrichtung abgegeben werden. Der Auslass **115** für die Hämatit-Pigmentsuspension **PAQ-Fe₂O₃** ist über Leitung **L-2** kommunizierend mit dem Einlass **211** der Pumpe **21** verbunden. In dieser Ausführungsform ist der zweite stickoxidhaltige Stoffstrom **NOX-2** identisch mit dem ersten stickoxidhaltigen Stoffstrom **NOX-1,** da er direkt ohne weitere Veränderung seiner Zusammensetzung über den suspensionsbetriebenen Selbstansaugenden Ejektor **20** mit der Hämatit-Pigmentsuspension **PAQ-Fe₂O₃** außerhalb des Reaktionsbehälters **11** vermischt wird. In weiteren Ausführungsformen kann das sauerstoffhaltige Gas **A** und / oder der Direktdampf **DS** auch an einer anderen Stelle des Reaktors **1** über ein geeignetes Mittel in die Hämatit-Pigmentsuspension **PAQ-Fe₂O₃** eingeleitet werden, beispielsweise über ein mit der Leitung **L-1,** der Leitung **L-2,** der Leitung **L-3** oder der Leitung **L-4** kommunizierendes Mittel. Wird das sauerstoffhaltige Gas **A** beispielsweise über ein mit der Leitung **L-1** kommunizierendes Mittel in die Hämatit-Pigmentsuspension **PAQ-Fe₂O₃** eingeleitet, ist in diesem Fall die Zusammensetzung des aus dem Reaktionsbehälters **11** ausgeleitetem zweite stickoxidhaltige Stoffstrom **NOX-2** nicht identisch mit der Zusammensetzung des ersten stickoxidhaltigen Stoffstrom **NOX-1.**

In weiteren Ausführungsformen kann beispielweise Reaktionsbehälter **11** in den Figuren 2 bis 5 durch den Reaktionsbehälter **11** gemäß Figur 1, der äußere Begrenzung **12,** Vorlage für Eisen **14,** Halterung **13** für **12** und **14** umfasst, ersetzt werden.

Das erfindungsgemäße Verfahren wird im Folgenden detaillierter beschrieben.

Im Folgenden wird die Durchführung des erfindungsgemäßen Verfahrens beispielhaft beschrieben. Zur Durchführung des erfindungsgemäßen Verfahrens werden die Einsatzstoffe Eisen, gegebenenfalls Wasser, Eisen(II)nitrat-Lösung und Hämatit-Keimsuspension über einen Einlass, beispielsweise Einlass **111,** in den Reaktionsbehälter, beispielsweise Reaktionsbehälter **11,** gegeben.

In einer Ausführungsform erfolgt die erfindungsgemäße Umsetzung des Eisens, der Hämatit-Keimsuspension, enthaltend Hämatit-Keime, die eine Teilchengröße von 100 nm oder weniger und eine spezifische BET-Oberfläche von 40 m²/g bis 150 m²/g (gemessen nach DIN 66131) aufweisen, und der Eisen(II)nitratlösung in Gegenwart von zumindest einem ersten stickoxidhaltigen Stoffstrom und gegebenenfalls Sauerstoff bei Temperaturen von 70 bis 120°C, bevorzugt von 70 bis 99°C derart, dass das Eisen auf eine Vorlage für Eisen, beispielsweise Vorlage für Eisen **14,** bereitgestellt wird, indem das Eisen gleichmäßig mit einer bevorzugten Schüttdichte von höchstens 2000 kg Eisen/m³, besonders bevorzugt höchstens 1000 kg Eisen/m³ auf der Vorlage für Eisen, beispielsweise Vorlage für Eisen **14,** verteilt wird. Das auf der Vorlage für Eisen, beispielsweise Vorlage für Eisen **14,** verteilte Eisen wird auch Eisenschüttung genannt. Die Schüttdichte der Eisenschüttung kann durch Biegen von zumindest einer Eisenqualität und/oder durch gezieltes Legen des Eisens realisiert werden. Das Eisen wird hierbei so auf die Vorlage für Eisen, beispielsweise Vorlage für Eisen **14,** gelegt, dass der zumindest eine stickoxidhaltige Stoffstrom durch die Zwischenräume zwischen den Eisenstücken hindurchströmen kann, um in den Kontakt mit dem Eisen zu gelangen.

Die Reaktionsmischung wird auf eine Temperatur von 70 bis 120°C, bevorzugt von 70 bis 99°C aufgeheizt. Dabei wird durch Oxidation mit zumindest einem ersten stickoxidhaltigem Stoffstrom mit einer Zusammensetzung von zumindest von 5-30 Gew.% O₂, 0,1-50 Gew.% NOₓ (berechnet als Gew.% NO₂), bevorzugt 1-50 Gew.% NOₓ (berechnet als Gew.% NO₂), und als Rest weitere Gase, wobei die Gewichtsprozente auf wasserfreies Gas bezogen sind und die Summe der Gewichtsprozente der Gase O₂, NOₓ (berechnet als Gew.% NO₂) und weitere Gase 100 Gew.% ergibt, und gegebenenfalls Sauerstoff, bevorzugt in Form von gasförmigem O₂ oder Luft, Hämatit auf den Hämatitkeim gefällt.

Dabei werden während der Reaktion Proben des stickoxidhaltigen Stoffstroms, beispielsweise des zweiten stickoxidhaltige Stoffstroms **NOX-2,** entnommen und auf den Sauerstoffgehalt geprüft. Während der Umsetzung nimmt erfahrungsgemäß der Sauerstoffgehalt und der Gehalt an Stickoxiden im stickoxidhaltigen Stoffstrom, beispielsweise im zweiten stickoxidhaltige Stoffstrom **NOX-2,** kontinuierlich ab. Fällt der Sauerstoffgehalt unter eine Grenze von unter 5 Gew.%, bevorzugt unter 10 Gew.%. (bezogen auf wasserfreies Gas), wird sauerstoffhaltiges Gas, beispielsweise das sauerstoffhaltige Gas **A,** in die die flüssige Reaktionsmischung und/oder in den stickoxidhaltigen Stoffstrom, der in die flüssige Reaktionsmischung zurückgeführt wird, beispielsweise in den ersten stickoxidhaltigen Stoffstrom **NOX-1** zugegeben.

Der Eintrag des zumindest einen stickoxidhaltigen Gases, beispielsweises des zumindest einen stickoxidhaltigen Gases **NOX-1,** in die Reaktionsmischung findet bevorzugt mittels einer Begasungseinheit, beispielsweise Begasungseinheit **15,** statt. Die Begasungseinheit **15** ist typischerweise ausgestaltet als Begasungsring, Düsen, (Zwei)-Stoffstrahler oder einer mit Löchern versehenen Rohrleitung, die sich innerhalb der Reaktionsmischung befindet. Ebenfalls bevorzugt findet die Rückführung von zumindest einem stickoxidhaltigen Stoffstrom durch selbstansaugende Dampfejektoren in die flüssige Reaktionsmischung statt. Hierbei kann der Dampf **DS** sowohl als Heizmedium, als auch als Treibmedium für die Ansaugung des stickoxidhaltigen Gasen verwendet werden. Hierfür muss der zumindest eine stickoxidhaltige Stoffstrom, beispielsweises der zumindest eine stickoxidhaltige Stoffstrom **NOX-1,** einen ausreichenden Druck aufweisen, um gegen den hydrostatischen Druck der Flüssigkeitssäule der Reaktionsmischung wirken zu können. Der Eintrag des zumindest einen stickoxidhaltigen Gases, beispielsweises des zumindest einen stickoxidhaltigen Gases **NOX-1,** findet bevorzugt unterhalb der Vorlage für Eisen, beispielsweise unterhalb der Vorlage für Eisen **14,** statt, sodass der zumindest eine stickoxidhaltige Stoffstrom, beispielsweises der zumindest eine stickoxidhaltige Stoffstrom **NOX-1,** durch die Eisenschüttung hindurch strömt. Im Vergleich zur Reaktorhöhe befindet sich eine Begasungseinheit beispielsweise in der unteren Hälfte, bevorzugt im unterem Drittel, des Reaktors.

Während des erfindungsgemäßen Verfahrens wird ein zweiter stickoxidhaltiger Stoffstrom, beispielsweise ein zweiter stickoxidhaltiger Stoffstrom **NOX-2,** erzeugt. Dieser tritt aus der flüssigen Reaktionsmischung als gasförmiger Stoffstrom aus, und wird über einen Auslass, beispielsweise über Auslass **112,** aus dem Reaktionsbehälter, beispielsweise Reaktionsbehälter **11,** über Leitung **L-1** zum Einlass, beispielweise Einlass **161,** des Mehrwegeventils, beispielsweise des Mehrwegeventils **16,** gefördert. In den oben beschriebenen Ausführungsformen wird der stickoxidhaltige Stoffstrom entweder aus demselben Reaktionsbehälter oder aus einem anderen Reaktionsbehälter zurückgeführt, in dem eine Reaktion erfolgt, die einen stickoxidhaltigen Stoffstrom erzeugt.

Während des erfindungsgemäßen Verfahrens wird auf den in der flüssigen Phase enthaltenen Hämatit-Keim das Pigment aufgebaut, wodurch eine Hämatit-Pigmentsuspension erzeugt wird, dessen Farbwerte, bevorzugt dessen a*- und b*-Werte in der Lackabtestung, sich während der Reaktion durch die beim Pigmentaufbau sich ändernden Teilchengröße und/oder -morphologie ändern. Durch Messen der Farbwerte des in der Hämatit-Pigmentsuspension enthaltenen Hämatit-Pigments wird der Zeitpunkt bestimmt, zu dem das erfindungsgemäße Verfahren abgebrochen wird. Das erfindungsgemäße Verfahren wird abgebrochen, wenn das Hämatit-Pigment in der Lackabtestung den gewünschten Farbton, bevorzugt die gewünschten a*- und b*-Werte im Purton oder in der Aufhellung, aufweist. Dies erfolgt durch Beendigung der Begasung, gegebenenfalls durch gleichzeitiges Abkühlen der Reaktionsmischung auf eine Temperatur von unter 70°C. Typische Reaktionszeiten für die erfindungsgemäße Umsetzung liegen bei 10 bis 150 Stunden, abhängig vom gewünschten Farbton.

Die so hergestellten Hämatit-Pigmentsuspension, beispielsweise die Hämatit-Pigmentsuspension **PAQ-Fe₂O₃,** wird entweder in einen optionalen Lagerbehälter zwischengelagert (nicht in den Figuren dargestellt) und/oder direkt über einen Auslass, beispielsweise den Auslass **113,** über eine Leitung in die eine Abtrenneinrichtung (nicht in den Figuren dargestellt) transportiert, in der die Abtrennung des Pigments aus der Reaktionsmischung erfolgt.

In einer bevorzugten Ausführungsform erfolgt nach der erfindungsgemäßen Umsetzung die Abtrennung des Hämatit-Pigments von der Hämatit-Suspension nach üblichen Methoden, bevorzugt durch Filtration und/oder Sedimentation und/oder Zentrifugation. Ebenfalls bevorzugt erfolgt Waschen nach der Abtrennung erhaltenen Filterkuchens und nachfolgende Trocknung des Filterkuchens. Ebenfalls bevorzugt werden vor der Abtrennung des Hämatit-Pigments von der Hämatit-Pigmentsuspension ein oder mehrere Siebungsschritte, besonders bevorzugt mit unterschiedlichen Maschenweiten und mit absteigenden Maschenweiten, durchgeführt. Dies hat den Vorteil, dass dadurch Fremdkörper, beispielsweise Metallstücke, von der Hämatit-Pigmentsuspension abgetrennt werden, die sonst das Hämatit-Pigment verunreinigen würden.

Für die Abtrennung des Hämatit-Pigments von der Hämatit-Pigmentsuspension können alle dem Fachmann bekannten Verfahren durchgeführt werden, z.B. Sedimentation mit anschließender Abtrennung der wässrigen Phase oder Filtration über Filterpressen, beispielsweise über Membranfilterpressen.

In einer bevorzugten Ausführungsform des erfindungsgemäßen Verfahrens kann zumindest ein Sulfatsalz, beispielsweise Eisen(II)sulfat und/oder ein Alkali- oder Erdalkalisulfat, bevorzugt Eisen(II)sulfat und/oder Natriumsulfat, zur Hämatit-Pigmentsuspension während oder vor der Siebung und/oder während oder vor der Abtrennung gegeben werden. Dies hat den Vorteil, dass die Sedimentation des Hämatit-Pigments aus der Hämatit-Pigmentsuspension beschleunigt wird. Dies erleichtert die nachfolgende Abtrennung des Hämatit-Pigments. Weiterhin kann, wenn Eisen(II)sulfat verwendet wird, die Aufbaureaktion weiter durchgeführt werden. Anschließend findet eine Resteisenfällung mit Natronlauge statt, wobei der pH-Wert unter Luftbegasung durch Zugabe von einem alkalischen Fällungsmittel (z.B. NaOH, KOH, CaCO₃, Na₂CO₃, K₂CO₃, etc.) auf pH 3,5 bis 6, bevorzugt 4-5 eingestellt wird, bis der Eisen(II)Gehalt <0,1 g/l beträgt. Nach vollständigem Ausfällen wird die Begasung abgestellt und der pH-Wert durch weitere Zugabe des alkalischen Fällungsmittel auf pH 4-6 eingestellt.

Gegebenenfalls erfolgt anschließend zumindest eine Wäsche des so abgetrennten Sedimentes oder Filterkuchens. Gegebenenfalls erfolgt nach der Abtrennung und/oder der Wäsche eine Trocknung des so abgetrennten Hämatit-Pigments-, beispielsweise mit Filtertrocknern, Bandtrocknern, Knettrocknern, Spinflash-Trocknern, Trockenschränken oder Sprühtrocknern. Bevorzugt erfolgt die Trocknung mit Bandtrocknern, Tellertrocknern, Knettrocknern und/oder Sprühtrocknern.

Überraschenderweise wurde gefunden, dass bei dem erfindungsgemäßen Verfahren gegenüber den Verfahren nach dem Stand der Technik, bei dem der Pigmentaufbau in Gegenwart von deutlich höheren Mengen an Sauerstoff erfolgt, deutlich mehr Hämatit-Pigment pro eingesetztem Fe(NO₃)₂ erzeugt wird. Bei dem erfindungsgemäßen Verfahren stammt im Vergleich zum Verfahren nach dem Stand der Technik ein größerer Anteil des im Hämatit-Pigments enthaltenen Fe³⁺ aus dem Eisen und ein kleinerer Anteil des im Hämatit-Pigment enthaltenen Fe³⁺ aus dem Fe(NO₃)₂. Bei dem Verfahren gemäß dem Stand der Technik, in dem die Begasungsmengen von 10 m³ Gasvolumen/m³ Ansatzvolumen / Stunde Reaktionszeit verwendet werden, werden üblicherweise 1,7 kg Fe₂O₃ pro kg Fe(NO₃)₂ erzeugt. Bei dem erfindungsgemäßen Verfahren werden jedoch mindestens 2,0 kg Fe₂O₃ pro kg Fe(NO₃)₂ oder mehr, bevorzugt von 2,0 bis 4,0 kg Fe₂O₃ pro kg Fe(NO₃)₂ erzeugt. Dadurch wird das Verfahren wirtschaftlicher, da zur Herstellung weniger Eisen(II)nitratlösung benötigt wird, die im Gegensatz zum eingesetzten Eisen separat hergestellt werden muss. Darüber hinaus werden bei dem erfindungsgemäßen Verfahren durch die niedrigeren extern eingetragenen Begasungsvolumina im Vergleich zum Stand der Technik deutlich weniger Stickoxide im Bereich von als Abgas erzeugt aus dem Reaktor ausgetragen. Bei dem Verfahren nach dem Stand der Technik, bei dem eine hohe Begasungsmenge von größer als 10 m³ Gasvolumen/ m³ Ansatzvolumen/ Stunde Reaktionszeit an sauerstoffhaltigem Gas eingesetzt wird, werden typischerweise 80 g nitrose Gase wie NO und NO₂ (immer berechnet als NO₂) pro Kilogramm erzeugtes Pigment oder mehr, sowie 40 g Distickstoffmonoxid pro Kilogramm erzeugtes Pigment oder mehr aus der Reaktionsmischung als Abgas an die Umgebung abgegeben. Im erfindungsgemäßen Verfahren dienen die in der flüssigen Phase gelösten Stickoxide selbst als Oxidationsmittel wie das zumindest eine stickoxidhaltige Gas, das Eisen zu Fe³⁺ oxidiert. Hierbei werden die Stickoxide, in denen der Stickstoff die Oxidationszahlen +1 bis +5 aufweist, entweder zu Stickstoff, d.h. zu N₂, der die Oxidationszahl 0 aufweist, oder zu Ammoniumverbindungen reduziert, in denen der Stickstoff die Oxidationszahl -3 aufweist. Dadurch entstehen bei dem erfindungsgemäßen Verfahren deutlich geringere Mengen an Stickoxiden und/ oder Ammoniumverbindungen, die entweder an die Umgebung abgegeben werden oder aufwändig durch Gaswäschen oder andere Gas- oder Abwasserreinigungsmethoden entfernt werden müssen. Bei dem erfindungsgemäßen Verfahren werden weniger als 50 g, bevorzugt weniger als 30 g NOx (berechnet als NO₂) pro kg erzeugtem Hämatit und/oder weniger als 30 g, bevorzugt weniger als 20 g N₂O pro kg erzeugtem Hämatit als Abgas erzeugt, das an die Umgebung abgegeben wird oder das durch Gaswäschen oder andere Gas- oder Abwasserreinigungsmethoden entfernt werden muss. Darüber hinaus wird durch die Rückführung des stickoxidhaltigen Stoffstroms im Vergleich zum Stand der Technik deutlich weniger Energie aus der auf 70 bis 120°C, bevorzugt auf 70 bis 99°C erhitzten Reaktionsmischung aus dem Reaktionssystem ausgetragen. Da die Menge an gebildeten Fe₂O₃ pro kg Fe(NO₃)₂ deutlich gesteigert wird, kann dementsprechend ohne Ausbeuteverluste an Hämatit-Pigment die Menge an eingesetztem Eisennitrat bei dem Pigmentaufbau im gleichen Maße reduziert werden. Eine Reduzierung der in die Reaktionsmischung zugegebenen Sauerstoffmenge ohne Einleitung eines stickoxidhaltigen Stoffstroms führt dagegen nicht zu einer Verbesserung dieser Parameter. Vielmehr wird hierdurch in geringen Ausbeuten ein Eisenoxidgemisch erzeugt, das die Anforderungen an ein Rotpigment in keiner Weise erfüllt.

Mit dem erfindungsgemäßen Verfahren und der erfindungsgemäßen Vorrichtung, in der das erfindungsgemäße Verfahren durchgeführt wird, ist es nun möglich Eisenoxid-Rot-Pigmente nach dem Penniman-Verfahren mit Nitrat in hoher Qualität, in hohen Ausbeuten, energieeffizient und unter Vermeidung von Abgasen, die unerwünschte Reaktionsprodukte wie nitrose Gase oder Lachgas, enthalten, herzustellen.

### Beispiele und Methoden:

### Titration Eisen(II) und Eisen(III)bestimmung:

Der Gehalt an Eisen(II)nitrat kann indirekt über die Messung des Eisen(II)-Gehaltes über eine potentiometrischen Titration einer mit Salzsäure angesäuerten Probenlösung mit Cer(III)sulfat bestimmt werden.

### NOₓ-Messung

NOₓ-Messungen wurden mit einem Gasanalysator PG 250 der Firma Horriba, (Chemielumineszenz-Verfahren) durchgeführt. Angaben über NOₓ-Bildung wurden im Verhältnis zur Pigmentausbeute angegeben (gerechnet als NO₂, in g NO₂ / kg Pigment). In dem Gasanalysator wird durch eine Kühlfalle die Gasprobe entwässert. Die NOₓ-Emission, die bei der Herstellung der Ausgangsstoffe Hämatit-Keim und Eisennitrat gebildet wurden, sind nicht mit inbegriffen.

### N₂O-Messung

Zur Probenvorbereitung wird eine Probe des zu messenden Gases zunächst über eine Kühleinrichtung, beispielsweise eine mit Eiswasser gekühlte Gaswaschflasche, geleitet, sodass das getrocknete Gas eine Temperatur von maximal 40°C aufweist. Dabei sinkt der Wasseranteil typischerweise auf 40 bis 50 g Wasserdampf/m³ Luft. Lachgasmessungen wurden über eine quantitative gaschromatographische Bestimmung und/oder über Infrarotmessung durchgeführt. Angaben über N₂O-Bildung wurden im Verhältnis zur Pigmentausbeute angegeben (g N₂O/ kg Pigment). Die N₂O-Emission, die bei der Herstellung der Ausgangsstoffe Hämatit-Keim und Eisennitrat gebildet wurden, sind nicht mit inbegriffen.

### O₂-Messung

Zur Probenvorbereitung wird eine Probe des zu messenden Gases zunächst über eine Kühleinrichtung, beispielsweise eine mit Eiswasser gekühlte Gaswaschflasche, geleitet, sodass das getrocknete Gas eine Temperatur von maximal 40°C aufweist. Dabei sinkt der Wasseranteil typischerweise auf 40 bis 50 g Wasserdampf/m³ Luft. Die Messung des Sauerstoffgehaltes in dem getrockneten stickoxidhaltigen Stoffstrom erfolgt beispielsweise über einen elektrochemischen Sensor, der selektiv die Sauerstoffkonzentration im Gasgemisch bestimmen kann. Die Messung des Sauerstoffgehaltes in dem getrockneten stickoxidhaltigen Stoffstrom ist auch mit anderen Methoden möglich. Da es sich bei dem Sauerstoffgehalt um eine absolute Stoffgröße handelt, die über den Vergleich mit Referenzproben absolut bestimmt werden kann, werden vom Fachmann hier nur Methoden verwendet, die über Referenzproben validiert wurden.

### N₂-Messung

Zur Probenvorbereitung wird eine Probe des zu messenden Gases zunächst über eine Kühleinrichtung, beispielsweise eine mit Eiswasser gekühlte Gaswaschflasche, geleitet, sodass das getrocknete Gas eine Temperatur von maximal 40°C aufweist. Dabei sinkt der Wasseranteil typischerweise auf 40 bis 50 g Wasserdampf/m3 Luft. Die Messung des Stickstoffgehaltes in dem getrockneten stickoxidhaltigen Stoffstrom erfolgt über Gaschromatographie. Hierfür werden Gasproben z.B. durch Auffüllen von evakuierten Gasprobenflaschen mit Abgas genommen und gaschromatographisch quantitativ bestimmt. Die Messung des Stickstoffgehaltes in dem getrockneten stickoxidhaltigen Stoffstrom ist auch mit anderen Methoden möglich. Da es sich bei dem Stickstoffgehalt um eine absolute Stoffgröße handelt, die über den Vergleich mit Referenzproben absolut bestimmt werden kann, werden vom Fachmann hier nur Methoden verwendet, die über Referenzproben validiert wurden.

### Beispiele 1-8:

Die Beispiele 1 bis 8 wurden in dem gleichen Reaktor in vergleichbarem Maßstab (Einsatzmengen Eisen zwischen 55 und 60 kg) durchgeführt, wobei die identischen Bedingungen, sowie die identischen relativen Verhältnisse zwischen den Mengen der Einsatzstoffe und der Volumina der Lösungen eingestellt wurden. Das eingesetzte Eisen liegt generell im Überschuss vor. Als Parameter wurden variiert: Begasungsmenge pro Volumen; Rühren: ja oder nein, Rührgeschwindigkeit, Umpumpen: ja oder nein, Umpumpmenge und Rückführung des bei der Reaktion gebildeten stickoxidhaltigen Stoffstroms. Diese Parameter sind in Tabelle 1 für jedes Beispiel separat angegeben.

Eine detaillierte Versuchsbeschreibung ist nachfolgend für Beispiel 1 angegeben.

55 kg Eisenblech mit einer Dicke von etwa 1 mm wurden in einem 1 m³-Reaktor, ausgestattet mit Siebboden (Maschenweite ca. 10 mm), Begasungsring (am Reaktorboden), Umpumpung und Schrägblattrührer vorgelegt. Der Begasungsring und der Rührer sind unterhalb des Siebbodens angebracht, der Auslass der Umpumpung seitlich an der Eisenschüttung, die Ansaugung der Umpumpung am Reaktorboden. Das Eisenblech mit einer Schüttdichte von 0,6-0,8 kg/l wurde auf dem Siebboden gleichmäßig verteilt. Anschließend wurde Wasser, Eisen(II)nitratlösung (entsprechend 19,2 kg Fe(NO₃)₂ berechnet als wasserfreies Fe(NO₃)₂) und Hämatit-Keimsuspension (entsprechend 16 kg Fe₂O₃), in den Mengen zugeben, so dass ein Ansatzvolumen von 700 Liter erreicht wird und die Konzentration an Keim (gerechnet als wasserfreies Fe₂O₃) 23 g/l beträgt und die Konzentration an Eisennitrat (berechnet als wasserfreies Fe(NO₃)₂) 28 g/l beträgt. Das Gemisch wurde mit eingeschalteter Umpumpung (Leistung 12 m³/h) auf 85°C aufgeheizt und bei dieser Temperatur während der Aufbaureaktion belassen. In dieser Umpumpleitung wurde ein selbstansaugender Ejektor eingebaut, der aus dem Reaktorgasraum die in Tabelle 1 angegebenen Mengen stickoxidhaltigen Stoffstrom (m³ stickoxidhaltigen Stoffstrom / m³ Reaktionsvolumen / Stunde) ansaugt und anschließend zusammen mit der Reaktionsmischung in den Reaktor zurückführt. Der Ausgang der Umpumpleitung ist getaucht und endet in Höhe des Siebbodens. Über den Begasungsring wurde zusätzlich Luft als sauerstoffhaltiges Gas in der in Tabelle 1 angegebenen Menge (m³ Luft / m³ Reaktionsvolumen / Stunde) dermaßen eingeleitet, sodass der Sauerstoffgehalt im Gasraum oberhalb der Reaktionsmischung einen Konzentrationsbereich von 5 Vol.% nicht unterschreitet.
Nachdem die Fe(NO₃)₂ Konzentration (gemessen als wasserfreies Fe(NO₃)₂ eine Konzentration von <10 g/l erreicht hat, wurden 23 Liter einer Eisen(II)sulfat Lösung mit einer Konzentration von 260 g/l zugeben und der Ansatz bis zu einer gemessenen Eisen(II) Konzentration (gemessen als Fe(II)-Ionen) von 2 g/l gefahren. Anschließend wurde über die Umpumpleitung Natronlauge (100 g/l Konzentration) so zudosiert, sodass ein pH-Wert im Bereich von 3,5 bis 4,5 gehalten wird. Nachdem die Fe(II) Konzentration <0,1 g/l betrug, wurde durch weiteres Zudosieren von NaOH ein pH-Wert von 5,0 eingestellt und anschließend die Begasung gestoppt und die Beheizung beendet.
Dann wurde die Reaktionsmischung über eine Filterpresse filtriert und das erhaltene Hämatit-Pigment mit Wasser gewaschen. Das Hämatit-Pigment wurde nachfolgend bei 80°C bis zu einer Restfeuchte kleiner 5 Gew.% getrocknet. Anschließend wurde der getrocknete Filterkuchen mechanisch mit einem Schroter zerkleinert.

In Tabelle 1 sind die variierten Verfahrensparameter für die Beispiele 1-6 (erfindungsgemäß) und Beispiele 7 bis 8 (Vergleichsbeispiele), die in die Reaktion zugegebene Menge Sauerstoff und stickoxidhaltigem Stoffstrom, die gebildete Menge an NOₓ pro gebildetem kg Pigment, die gebildete Menge an N₂O pro gebildetem kg Pigment, sowie der Quotient aus kg Fe₂O₃ pro kg Fe(NO₃)₂ angegeben.

Die erfindungsgemäßen Beispiele zeigen deutlich, dass die Kombination aus Rückführung des stickoxidhaltigen Stoffstroms und Reduzierung des in die Reaktion eingesetzten Sauerstoffs die Menge an gebildetem Hämatit im Vergleich zum verbrauchten Eisennitrat erhöht und die Menge an gebildetem Abgas NOx und N₂O reduziert, die an die Umwelt oder an Abgasreinigungsvorrichtungen abgegeben werden muss. Darüber hinaus wird durch die günstigere Abgasbilanz auch die Menge an aus der Reaktion an die Umwelt abgegebene Energie deutlich reduziert. wodurch die Energiebilanz des erfindungsgemäßen Verfahrens deutlich günstiger ist als die nach den Verfahren des Standes der Technik.

**Tabelle 1:**

| **Beispiel** | **Art der Durchmischung** | **Begasung pro Volumen Reaktionsmischung pro Zeit [m³/m³/h]** | **Sauerstoffmenge, die in die Reaktion zugegeben wird** [**kg O₂/kg Fe₂O₃]** | **NO/NO₂ [berechnet als NO₂ in g/kg gebildetem Pigment**] | **N₂O [in g/kg gebildetem Pigment]** | **kg Fe2O3 gebildet / kg Fe(NO3)2 verbraucht** |
|---|---|---|---|---|---|---|
| 1 | Rührer: 140 UPM (3,7 m/s) Umpumpung: 12 m³/m³ Ansatzvolumen/h | 0,66 m³/m³/h Luft und 1,33 m³/m³/h Rückführung des stickoxidhaltigen Stoffstroms, der aus demselben Reaktor entnommen wurde | 0,2 | 7 | 14 | 2,4 |
| 2 | Kein Rührer Umpumpung: 12 m³/m³ und Gasdurchmischung | 0,66 m³/m³/h Luft und 1,33 m³/m³/h Rückführung des stickoxidhaltigen Stoffstroms, der aus demselben Reaktor entnommen wurde | 0,19 | 5 | 12 | 2,5 |
| 3 | Kein Rührer Umpumpung: 12 m³/m³ und Gasdurchmischung, | Diskontinuierlich: 1,33 m³/m³/h Rückführung des stickoxidhaltigen Stoffstroms und 0 - 0,66 m³/m³/h Luft wenn O₂-Gehalt kleiner 5 Gew.%% | 0,1 | 4 | 15 | 3,0 |
| 4 | Kein Rührer, keine Umpumpung, Gasdurchmischung | Kontinuierlich: 1 m³/m³/h Luft und 9 m³/m³/h Rückführung des stickoxidhaltigen Stoffstroms | 0,3 | 10 | 17 | 2,1 |
| 5 | Kein Rührer, keine Umpumpung, Gasdurchmischung | Diskontinuierlich: a) 3 m³/m³/h Frischluft (10 min) und anschließend b) 40 m³/m³/h Rückführung des stickoxidhaltigen Stoffstroms, über Kompressor (50 Minuten), Wiederholung der Schritte a) und b) bis zum Ende der Reaktion | 0,15 | 9 | 14 | |
| 6 | Gasdurchmischung | 1 m³/m³/h Frischluft und 40 m³/m³/h Rückführung des stickoxidhaltigen Stoffstroms über Kompressor | 0,32 | 9 | 14 | |
| 7 | Kein Rührer, keine Umpumpung | 1 m³/m³/h Luft | | >150 Keine Pigmentqualität erzielt! | >60 | 0,3 |
| 8 | Kein Rührer, keine Umpumpung | 10 m³/m³/h Luft | 2,9 | 114 | 57 | 1,7 |

## Patentansprüche

1. Vorrichtung zur Herstellung von Hämatit umfassend zumindest
• Reaktionsbehälter (11), und
• Vorlage (14) für Eisen, und
• zumindest eine Begasungseinheit (15) für zumindest einen ersten stickoxidhaltigen Stoffstrom (NOX-1) und/oder Direktdampf (DS), und
• zumindest ein Mehrwegeventil (16), und
• Einlass (111) für Eisen(II)nitrat-Lösung, Hämatit-Keimsuspension, und gegebenenfalls Wasser, und
• Auslass (112) für zumindest einen zweiten stickoxidhaltigen Stoffstrom (NOX-2), und
• Auslass (113) für die Hämatit-Pigmentsuspension (PAQ-Fe₂O₃) **dadurch gekennzeichnet, dass** Reaktionsbehälter (11) kommunizierend über Leitung (L-1) und Begasungseinheit (15) für zumindest einen ersten stickoxidhaltigen Stoffstrom (NOX-1) kommunizierend über Leitung (L-2) mit dem zumindest einen Mehrwegeventil (16) verbunden sind..

2. Vorrichtung zur Herstellung von Hämatit nach Anspruch 1, umfassend zusätzlich zumindest
• Einlass (161) für zumindest einen zweiten stickoxidhaltigen Stoffstrom (NOX-2),
• Auslass (162) für zumindest einen dritten stickoxidhaltigen Stoffstrom (NOX-3),
• Einlass (163) für zumindest ein sauerstoffhaltiges Gas (A), und
• Auslass (164) für zumindest einen ersten stickoxidhaltigen Stoffstrom (NOX-1).

3. Vorrichtung zur Herstellung von Hämatit umfassend zumindest
• Reaktionsbehälter (11),
• Vorlage (14) für Eisen,
• zumindest eine Begasungseinheit (15) für zumindest einen ersten stickoxidhaltigen Stoffstrom (NOX-1) und/oder Direktdampf (DS) und/oder zumindest ein sauerstoffhaltiges Gas (A),
• zumindest ein Mehrwegeventil (17), und
• zumindest eine Fördereinheit **dadurch gekennzeichnet, dass** die zumindest eine Fördereinheit ein Abgaskompressor (18) ist und dass Reaktionsbehälter (11) kommunizierend über Leitung (L-1) mit dem zumindest einen Mehrwegeventil (17), Abgaskompressor (18) kommunizierend über Leitung (L-2) mit dem zumindest einen Mehrwegeventil (17) und Abgaskompressor (18) kommunizierend über Leitung (L-3) mit der zumindest einen Begasungseinheit (15) verbunden sind.

4. Vorrichtung zur Herstellung von Hämatit nach Anspruch 3 umfassend zusätzlich zumindest
• Einlass (171) für zumindest einen zweiten stickoxidhaltigen Stoffstrom (NOX-2),
• Einlass (172) für zumindest ein sauerstoffhaltiges Gas (A), und
• Auslass (173) für zumindest einen ersten stickoxidhaltigen Stoffstrom (NOX-1),
• Einlass (181) für zumindest einen ersten stickoxidhaltigen Stoffstrom (NOX-1), und
• Auslass (182) für zumindest einen ersten stickoxidhaltigen Stoffstrom (NOX-1).

5. Vorrichtung zur Herstellung von Hämatit nach Anspruch 3, **dadurch gekennzeichnet, dass** die zumindest eine Fördereinheit ein selbstansaugender Ejektor (19) ist.

6. Vorrichtung zur Herstellung von Hämatit nach Anspruch 5 umfassend zusätzlich zumindest
• Einlass (191) für zumindest einen zweiten stickoxidhaltigen Stoffstrom (NOX-2),
• Einlass (192) für Direktdampf (DS), und
• Auslass (193) für zumindest einen ersten stickoxidhaltigen Stoffstrom (NOX-1).

7. Vorrichtung zur Herstellung von Hämatit nach Anspruch 5 oder 6, **dadurch gekennzeichnet, dass** Reaktionsbehälter (11) kommunizierend über Leitung (L-1) und die zumindest eine Begasungseinheit (15) kommunizierend über Leitung (L-2) mit dem selbstansaugenden Ejektor (19) verbunden sind.

8. Vorrichtung zur Herstellung von Hämatit umfassend zumindest
• Reaktionsbehälter (11),
• Vorlage (14) für Eisen,
• zumindest eine Begasungseinheit (15) für Direktdampf (DS) und/oder zumindest ein sauerstoffhaltiges Gas (A),
• zumindest ein selbstansaugender Ejektor (20)
• zumindest eine Pumpe (21), und
zumindest eine Einleitungseinheit (22) für Hämatit-Pigmentsuspension (PAQ-Fe₂O₃) **dadurch gekennzeichnet, dass** Reaktionsbehälter (11) kommunizierend über Leitung (L-1) und die zumindest eine Einleitungseinheit (22) kommunizierend über Leitung (L-3) mit dem zumindest einen selbstansaugender Ejektor (20), und Reaktionsbehälter (11) kommunizierend über Leitung (L-2) und zumindest ein selbstansaugender Ejektor (20) kommunizierend über Leitung (L-4) mit der zumindest einen Pumpe (21) verbunden sind.

9. Vorrichtung zur Herstellung von Hämatit nach Anspruch 8 umfassend zusätzlich zumindest
• Einlass (201) für zumindest einen ersten stickoxidhaltigen Stoffstrom (NOX-1),
• Einlass (202) für Hämatit-Pigmentsuspension (PAQ-Fe₂O₃)
• Auslass (203) für Hämatit-Pigmentsuspension (PAQ-Fe₂O₃),
• Einlass (211) für Hämatit-Pigmentsuspension (PAQ-Fe₂O₃), und
• Auslass (212) für Hämatit-Pigmentsuspension (PAQ-Fe₂O₃).

10. Vorrichtung zur Herstellung von Hämatit nach einem der Ansprüche 1 bis 9 umfassend zusätzlich zumindest
• äußere Begrenzung (12), und
• Halterung (13) für die äußere Begrenzung (12) und Vorlage (14),

11. Vorrichtung zur Herstellung von Hämatit nach einem der Ansprüche 1 bis 9 umfassend zusätzlich zumindest
• Auslass (114) für zumindest einen dritten stickoxidhaltigen Stoffstrom (NOX-3).

12. Verfahren zur Herstellung von Eisenoxid-Rot-Pigmenten, umfassend die Umsetzung von zumindest
• Eisen und
• einer wässrigen Hämatit-Keimsuspension, enthaltend Hämatit-Keime, die eine Teilchengröße von 100 nm oder weniger und eine spezifische BET-Oberfläche von 40 m²/g bis 150 m²/g (gemessen nach DIN 66131) aufweisen, und
• einer Eisen(II)nitratlösung und
• zumindest einem ersten stickoxidhaltigem Stoffstrom mit einer Zusammensetzung von zumindest von 5-30 Gew.% O₂, 0,1-50 Gew.% NOₓ (berechnet als Gew.% NO₂), bevorzugt 1-50 Gew.% NOₓ (berechnet als Gew.% NO₂), und als Rest weitere Gase, wobei die Gewichtsprozente auf wasserfreies Gas bezogen sind und die Summe der Gewichtsprozente der Gase O₂, NOₓ (berechnet als Gew.% NO₂) und weitere Gase 100 Gew.% ergibt,
bei Temperaturen von 70 bis 120°C, bevorzugt von 70 bis 99°C, **dadurch gekennzeichnet, dass** der zumindest eine erste stickoxidhaltige Stoffstrom in die flüssige Reaktionsmischung eingeleitet wird, wobei eine Hämatit-Pigmentsuspension und ein zweiter stickoxidhaltiger Stoffstrom erzeugt wird, wobei der zweite stickoxidhaltige Stoffstrom zumindest teilweise zur Erzeugung des ersten stickoxidhaltigen Stoffstroms oder als erster stickoxidhaltiger Stoffstrom eingesetzt wird.

13. Verfahren nach Anspruch 12, wobei zusätzlich Sauerstoff, bevorzugt in Form von gasförmigem O₂ oder Luft, der flüssigen Reaktionsmischung und/oder dem ersten stickoxidhaltigen Stoffstrom und/oder dem zweiten stickoxidhaltigen Stoffstrom zugegeben wird, sodass sichergestellt wird, dass der Gehalt an O₂ im zweiten stickoxidhaltigen Stoffstrom 5 Gew.%, bevorzugt 10 Gew.%, bezogen auf wasserfreies Gas, nicht unterschreitet.

14. Verfahren nach einem der Ansprüche 12 bis 13, **dadurch gekennzeichnet, dass** als erster stickoxidhaltiger Stoffstrom der bei der Umsetzung entstehende zweite stickoxidhaltige Stoffstrom in die Reaktionsmischung zurückgeführt wird.

15. Verfahren nach einem der Ansprüche 12 bis 14, **dadurch gekennzeichnet, dass** als erster stickoxidhaltiger Stoffstrom der bei einer anderen Umsetzung entstehende zweite stickoxidhaltige Stoffstrom in die Reaktionsmischung zugeführt wird.

16. Verfahren nach einem der Anspruche 12 bis 15, **dadurch gekennzeichnet, dass** während der Umsetzung Sauerstoff derart in die flüssige Reaktionsmischung zugeführt wird, dass der Sauerstoffgehalt in dem zweiten stickoxidhaltigen Stoffstrom mindestens 5 Gew.%, bevorzugt mindestens 10 Gew.%, (bezogen auf wasserfreies Gas) beträgt.

17. Verfahren nach einem der Ansprüche 12 bis 16, umfassend weiterhin die Abtrennung des Hämatit-Pigments von der Reaktionsmischung.

18. Verfahren zur Herstellung von Hämatit nach einem der Ansprüche 12 bis 17, wobei die Umsetzung von zumindest Eisen, einer wasserhaltigen Hämatit-Keimsuspension, einer Eisen(II)nitratlösung und einem stickoxidhaltigem Stoffstrom ohne eine zusätzlich mechanische Durchmischung und / oder ohne eine zusätzliche hydraulische Durchmischung durchgeführt wird.

19. Verfahren zur Herstellung von Hämatit nach einem der Ansprüche 12 bis 18, wobei die Umsetzung von zumindest Eisen, einer wasserhaltigen Hämatit-Keimsuspension, einer Eisen(II)nitratlösung, und einem stickoxidhaltigem Stoffstrom mit einer zusätzlichen mechanischen Durchmischung und / oder mit einer zusätzlichen hydraulischen Durchmischung durchgeführt wird.

20. Verfahren nach einem der Ansprüche 12 bis 19 durchgeführt in einer Vorrichtung nach einem der Ansprüche 1 bis 9.

21. Verwendung einer Vorrichtung nach einem der Ansprüche 1 bis 9 zur Herstellung von Hämatit-Pigmenten.

## Claims

1. Apparatus for producing haematite, which comprises at least
• reaction vessel (11), and
• support (14) for iron, and
• at least one gas introduction unit (15) for at least one first nitrogen oxide-containing stream (NOX-1) and/or direct steam (DS), and
• at least one multiway valve (16), and
• inlet (111) for iron (II) nitrate solution, haematite nucleus suspension and optionally water, and
• outlet (112) for at least one second nitrogen oxide-containing stream (NOX-2), and
• outlet (113) for the haematite pigment suspension (PAQ-Fe₂O₃),**characterized in that** the reaction vessel (11) is connected in a communicating manner to the at least one multiway valve (16) via conduit (L-1) and the gas introduction unit (15) for at least one first nitrogen oxide-containing stream (NOX-1) is connected in a communicating manner to the at least one multiway valve (16) via conduit (L-2) .

2. Apparatus for producing haematite according to Claim 1, additionally comprising at least
• inlet (161) for at least one second nitrogen oxide-containing stream (NOX-2),
• outlet (162) for at least one third nitrogen oxide-containing stream (NOX-3),
• inlet (163) for at least one oxygen-containing gas (A), and
• outlet (164) for at least one first nitrogen oxide-containing stream (NOX-1).

3. Apparatus for producing haematite, which comprises at least
• reaction vessel (11),
• support (14) for iron,
• at least one gas introduction unit (15) for at least one first nitrogen oxide-containing stream (NOX-1) and/or direct steam (DS) and/or at least one oxygen-containing gas (A),
• at least one multiway valve (17), and
• at least one conveying unit, **characterized in that** the at least one conveying unit is an offgas compressor (18) and **in that** the reaction vessel (11) is connected in a communicating manner to the at least one multiway valve (17) via conduit (L-1), the offgas compressor (18) is connected in a communicating manner to the at least one multiway valve (17) via conduit (L-2) and the offgas compressor (18) is connected in a communicating manner to the at least one gas introduction unit (15) via conduit (L-3).

4. Apparatus for producing haematite according to Claim 3, additionally comprising at least
• inlet (171) for at least one second nitrogen oxide-containing stream (NOX-2),
• inlet (172) for at least one oxygen-containing gas (A), and
• outlet (173) for at least one first nitrogen oxide-containing stream (NOX-1),
• inlet (181) for at least one first nitrogen oxide-containing stream (NOX-1), and
• outlet (182) for at least one first nitrogen oxide-containing stream (NOX-1).

5. Apparatus for producing haematite according to Claim 3, **characterized in that** the at least one conveying unit is a self-priming ejector (19).

6. Apparatus for producing haematite according to Claim 5, additionally comprising at least
• inlet (191) for at least one second nitrogen oxide-containing stream (NOX-2),
• inlet (192) for direct steam (DS), and
• outlet (193) for at least one first nitrogen oxide-containing stream (NOX-1).

7. Apparatus for producing haematite according to Claim 5 or 6, **characterized in that** the reaction vessel (11) is connected in a communicating manner to the self-priming ejector (19) via conduit (L-1) and the at least one gas introduction unit (15) is connected in a communicating manner to the self-priming ejector (19) via conduit (L-2).

8. Apparatus for producing haematite, which comprises at least
• reaction vessel (11),
• support (14) for iron,
• at least one gas introduction unit (15) for direct steam (DS) and/or at least one oxygen-containing gas (A),
• at least one self-priming ejector (20),
• at least one pump (21), and
at least one introduction unit (22) for haematite pigment suspension (PAQ-Fe₂O₃),**characterized in that** the reaction vessel (11) is connected in a communicating manner to the at least one self-priming ejector (20) via conduit (L-1) and the at least one introduction unit (22) is connected in a communicating manner to the at least one self-priming ejector (20) via conduit (L-3) and the reaction vessel (11) is connected to the at least one pump (21) via conduit (L-2) and at least one self-priming ejector (20) is connected in a communicating manner to the at least one pump (21) via conduit (L-4).

9. Apparatus for producing haematite according to Claim 8, additionally comprising at least
• inlet (201) for at least one first nitrogen oxide-containing stream (NOX-1),
• inlet (202) for haematite pigment suspension (PAQ-Fe₂O₃),
• outlet (203) for haematite pigment suspension (PAQ-Fe₂O₃),
• inlet (211) for haematite pigment suspension (PAQ-Fe₂O₃), and
• outlet (212) for haematite pigment suspension (PAQ-Fe₂O₃).

10. Apparatus for producing haematite according to any of Claims 1 to 9, additionally comprising at least
• outer delimitation (12), and
• holder (13) for the outer delimitation (12) and support (14).

11. Apparatus for producing haematite according to any of Claims 1 to 9, additionally comprising at least
• outlet (114) for at least one third nitrogen oxide-containing stream (NOX-3).

12. Process for producing iron oxide red pigments, comprising the reaction of at least
• iron and
• an aqueous haematite nucleus suspension containing haematite nuclei which have a particle size of 100 nm or less and a specific BET surface area of from 40 m²/g to 150 m²/g (measured in accordance with DIN 66131), and
• an iron(II) nitrate solution and
• at least one first nitrogen oxide-containing stream having a composition of at least 5-30% by weight of O₂, 0.1-50% by weight of NOₓ (calculated as % by weight of NO₂), preferably 1-50% by weight of NOₓ (calculated as % by weight of NO₂), and as balance further gases, where the percentages by weight are based on water-free gas and the sum of the percentages by weight of the gases O₂, NOₓ (calculated as % by weight of NO₂) and further gases adds up to 100% by weight,
at temperatures of from 70 to 120°C, preferably from 70 to 99°C, **characterized in that** the at least one first nitrogen oxide-containing stream is introduced into the liquid reaction mixture, with a haematite pigment suspension and a second nitrogen oxide-containing stream being produced and the second nitrogen oxide-containing stream being at least partly used for producing the first nitrogen oxide-containing stream or as first nitrogen oxide-containing stream.

13. Process according to Claim 12, wherein oxygen, preferably in the form of gaseous O₂ or air, is additionally introduced into the liquid reaction mixture and/or the first nitrogen oxide-containing stream and/or the second nitrogen oxide-containing stream so as to ensure that the content of O₂ in the second nitrogen oxide-containing stream does not go below 5% by weight, preferably 10% by weight, based on water-free gas.

14. Process according to either Claim 12 or 13, **characterized in that** second nitrogen oxide-containing stream formed in the reaction is recirculated as first nitrogen oxide-containing stream into the reaction mixture.

15. Process according to any of Claims 12 to 14, **characterized in that** the second nitrogen oxide-containing stream formed in another reaction is introduced as first nitrogen oxide-containing stream into the reaction mixture.

16. Process according to any of Claims 12 to 15, **characterized in that** oxygen is introduced into the liquid reaction mixture during the reaction in such a way that the oxygen content in the second nitrogen oxide-containing stream is at least 5% by weight, preferably at least 10% by weight (based on water-free gas).

17. Process according to any of Claims 12 to 16, further comprising the separation of the haematite pigment from the reaction mixture.

18. Process for producing haematite according to any of Claims 12 to 17, wherein the reaction of at least iron, a water-containing haematite nucleus suspension, an iron(II) nitrate solution and a nitrogen oxide-containing stream is carried out without additional mechanical mixing and/or without additional hydraulic mixing.

19. Process for producing haematite according to any of Claims 12 to 18, wherein the reaction at least iron, a water-containing haematite nucleus suspension, an iron(II) nitrate solution and a nitrogen oxide-containing stream is carried out with additional mechanical mixing and/or with additional hydraulic mixing.

20. Process according to any of Claims 12 to 19 carried out in an apparatus according to any of Claims 1 to 9.

21. Use of an apparatus according to any of Claims 1 to 9 for producing haematite pigments.

## Revendications

1. Dispositif pour la préparation d'hématite comprenant au moins
• un récipient de réaction (11), et
• une partie fonctionnelle (14) pour le fer, et
• au moins une unité de gazage (15) pour au moins un premier flux contenant de l'oxyde d'azote (NOX-1) et/ou pour de la vapeur directe (DS), et
• au moins une vanne à plusieurs voies (16), et
• une entrée (111) pour une solution de nitrate de fer(II), une suspension de germes d'hématite, et éventuellement de l'eau, et
• une sortie (112) pour au moins un deuxième flux contenant de l'oxyde d'azote (NOX-2), et
• une sortie (113) pour la suspension de pigment d'hématite (PAQ-Fe₂O₃) **caractérisée en ce que** le récipient de réaction (11) communiquant par l'intermédiaire de la conduite (L-1) et l'unité de gazage (15) pour au moins un premier flux contenant de l'oxyde d'azote (NOX-1) communiquant par l'intermédiaire de la conduite (L-2) sont reliés avec l'au moins une vanne à plusieurs voies (16).

2. Dispositif pour la préparation d'hématite selon la revendication 1, comprenant de plus au moins
• une entrée (161) pour au moins un deuxième flux contenant de l'oxyde d'azote (NOX-2),
• une sortie (162) pour au moins un troisième flux contenant de l'oxyde d'azote (NOX-3),
• une entrée (163) pour au moins un gaz (A) contenant de l'oxygène, et
• une sortie (164) pour au moins un premier flux contenant de l'oxyde d'azote (NOX-1).

3. Dispositif pour la préparation d'hématite comprenant au moins
• un récipient de réaction (11),
• une partie fonctionnelle (14) pour le fer,
• au moins une unité de gazage (15) pour au moins un premier flux contenant de l'oxyde d'azote (NOX-1) et/ou pour de la vapeur directe (DS) et/ou pour au moins un gaz (A) contenant de l'oxygène,
• au moins une vanne à plusieurs voies (17), et
• au moins une unité d'alimentation **caractérisée en ce que** l'au moins une unité d'alimentation est un compresseur (18) de gaz d'échappement et **en ce que** le récipient de réaction (11) communiquant par l'intermédiaire de la conduite (L-1) avec l'au moins une vanne à plusieurs voies (17), le compresseur (18) de gaz échappement communiquant par l'intermédiaire de la conduite (L-2) avec l'au moins une vanne à plusieurs voies (17) et le compresseur (18) de gaz d'échappement communiquant par l'intermédiaire de la conduite (L-3) sont reliés avec l'au moins une unité de gazage (15) .

4. Dispositif pour la préparation d'hématite selon la revendication 3 comprenant de plus au moins
• une entrée (171) pour au moins un deuxième flux contenant de l'oxyde d'azote (NOX-2),
• une entrée (172) pour au moins un gaz (A) contenant de l'oxygène, et
• une sortie (173) pour au moins un premier flux contenant de l'oxyde d'azote (NOX-1),
• une entrée (181) pour au moins un premier flux contenant de l'oxyde d'azote (NOX-1), et
• une sortie (182) pour au moins un premier flux contenant de l'oxyde d'azote (NOX-1).

5. Dispositif pour la préparation d'hématite selon la revendication 3, **caractérisé en ce que** l'au moins une unité d'alimentation est un éjecteur autoamorçant (19).

6. Dispositif pour la préparation d'hématite selon la revendication 5 comprenant de plus au moins
• une entrée (191) pour au moins un deuxième flux contenant de l'oxyde d'azote (NOX-2),
• une entrée (192) pour de la vapeur directe (DS), et
• une sortie (193) pour au moins un premier flux contenant de l'oxyde d'azote (NOX-1).

7. Dispositif pour la préparation d'hématite selon la revendication 5 ou 6, **caractérisé en ce que** le récipient de réaction (11) communiquant par l'intermédiaire de la conduite (L-1) et l'au moins une unité de gazage (15) communiquant par l'intermédiaire de la conduite (L-2) sont reliés avec l'éjecteur autoamorçant (19).

8. Dispositif pour la préparation d'hématite comprenant au moins
• un récipient de réaction (11),
• une partie fonctionnelle (14) pour le fer,
• au moins une unité de gazage (15) pour de la vapeur directe (DS) et/ou au moins un gaz (A) contenant de l'oxygène,
• au moins un éjecteur autoamorçant (20)
• au moins une pompe (21), et
au moins une unité d'introduction (22) pour une suspension de pigment d'hématite (PAQ-Fe₂O₃) **caractérisée en ce que** le récipient de réaction (11) communiquant par l'intermédiaire de la conduite (L-1) et l'au moins une unité d'introduction (22) communiquant par intermédiaire de la conduite (L-3) sont reliés avec l'au moins un éjecteur autoamorçant (20), et le récipient de réaction (11) communiquant par l'intermédiaire de la conduite (L-2) et au moins un éjecteur autoamorçant (20) communiquant par l'intermédiaire de la conduite (L-4) sont reliés avec l'au moins une pompe (21).

9. Dispositif pour la préparation d'hématite selon la revendication 8 comprenant de plus au moins
• une entrée (201) pour au moins un premier flux contenant de l'oxyde d'azote (NOX-1),
• une entrée (202) pour une suspension de pigment d'hématite (PAQ-Fe₂O₃) ,
• une sortie (203) pour une suspension de pigment d'hématite (PAQ-Fe₂O₃) ,
• une entrée (211) pour une suspension de pigment d'hématite (PAQ-Fe₂O₃) , et
• une sortie (212) pour une suspension de pigment d'hématite (PAQ-Fe₂O₃) .

10. Dispositif pour la préparation d'hématite selon l'une quelconque des revendications 1 à 9 comprenant de plus au moins
• une limite extérieure (12), et
• un support (13) pour la limite extérieure (12) et la partie fonctionnelle (14).

11. Dispositif pour la préparation d'hématite selon l'une quelconque des revendications 1 à 9 comprenant de plus au moins
• une sortie (114) pour au moins un troisième flux contenant de l'oxyde d'azote (NOX-3).

12. Procédé pour la préparation de pigments d'oxyde de fer rouge, comprenant la transformation au moins
• de fer et
• d'une suspension aqueuse de germes d'hématite, contenant des germes d'hématite, qui présentent une grosseur de particule de 100 nm ou moins et une surface spécifique BET de 40 m²/g à 150 m²/g (mesurée d'après la norme DIN 66131), et
• d'une solution de nitrate de fer(II) et
• d'au moins un premier flux contenant de l'oxyde d'azote doté d'une composition au moins de 5 à 30 % en poids de O₂, 0, 1 à 50 % en poids de NOₓ (calculé en % en poids de NO₂) , préférablement 1 à 50 % en poids de NOₓ (calculé en % en poids de NO₂), et pour le reste d'autres gaz, les pourcentages en poids se rapportant à un gaz exempt d'eau et la somme des pourcentages en poids des gaz O₂, NOₓ (calculé en % en poids de NO₂)et des autres gaz donnant 100 % en poids,
à des températures de 70 à 120 °C, préférablement de 70 à 99 °C, **caractérisé en ce que** l'au moins un premier flux contenant de l'oxyde d'azote est introduit dans le mélange réactionnel liquide, une suspension de pigment d'hématite et un deuxième flux contenant de l'oxyde d'azote étant produits, le deuxième flux contenant de l'oxyde d'azote étant utilisé au moins partiellement pour la production du premier flux contenant de l'oxyde d'azote ou en tant que premier flux contenant de l'oxyde d'azote.

13. Procédé selon la revendication 12, de l'oxygène, préférablement sous forme de O₂ gazeux ou d'air, étant de plus ajouté au mélange réactionnel liquide et/ou au premier flux contenant de l'oxyde d'azote et/ou au deuxième flux contenant de l'oxyde d'azote, de sorte qu'il est assuré que la teneur en O₂ dans le deuxième flux contenant de l'oxyde d'azote n'est pas inférieure à 5 % en poids, préférablement à 10 % en poids, par rapport au gaz exempt d'eau.

14. Procédé selon l'une quelconque des revendications 12 et 13, **caractérisé en ce qu'**en tant que premier flux contenant de l'oxyde d'azote, le deuxième flux contenant de l'oxyde d'azote produit lors de la transformation est renvoyé dans le mélange réactionnel.

15. Procédé selon l'une quelconque des revendications 12 à 14, **caractérisé en ce qu'**en tant que premier flux contenant de l'oxyde d'azote, le deuxième flux contenant de l'oxyde d'azote produit lors d'une autre transformation est introduit dans le mélange réactionnel.

16. Procédé selon l'une quelconque des revendications 12 à 15, **caractérisé en ce que** pendant la transformation, de l'oxygène est introduit dans le mélange réactionnel liquide de telle façon que la teneur en oxygène dans le deuxième flux contenant de l'oxyde d'azote est d'au moins 5 % en poids, préférablement d'au moins 10 % en poids, par rapport au gaz exempt d'eau.

17. Procédé selon l'une quelconque des revendications 12 à 16, comprenant de plus la séparation du pigment d'hématite du mélange réactionnel.

18. Procédé pour la préparation d'hématite selon l'une quelconque des revendications 12 à 17, la transformation au moins du fer, d'une suspension de germes d'hématite contenant de l'eau, d'une solution de nitrate de fer(II) et d'un flux contenant de l'oxyde d'azote étant mise en œuvre sans brassage mécanique supplémentaire et/ou sans brassage hydraulique supplémentaire.

19. Procédé pour la préparation d'hématite selon l'une quelconque des revendications 12 à 18, la transformation au moins du fer, d'une suspension de germes d'hématite contenant de l'eau, d'une solution de nitrate de fer(II) et d'un flux contenant de l'oxyde d'azote étant mise en œuvre avec un brassage mécanique supplémentaire et/ou avec un brassage hydraulique supplémentaire.

20. Procédé selon l'une quelconque des revendications 12 à 19 mis en œuvre dans un dispositif selon l'une quelconque des revendications 1 à 9.

21. Utilisation d'un dispositif selon l'une quelconque des revendications 1 à 9 pour la préparation de pigments d'hématite.
